(19) Europäisches Patentamt / European Patent Office / Office européen des brevets

(11) **EP 4 712 630 A1**

(12) **EUROPEAN PATENT APPLICATION**
published in accordance with Art. 153(4) EPC

(43) Date of publication:
**18.03.2026 Bulletin 2026/12**

(21) Application number: **24802810.2**

(22) Date of filing: **28.04.2024**

(51) International Patent Classification (IPC):
***H04W 72/0453*** (2023.01)

(52) Cooperative Patent Classification (CPC):
**H04L 5/14; H04W 72/0453; H04W 72/23**

(86) International application number:
**PCT/CN2024/090261**

(87) International publication number:
**WO 2024/230525 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.05.2023 CN 202310512363
09.05.2023 CN 202310520130**

(71) Applicant: **Apogee Networks, LLC
Plano, TX 75024 (US)**

(72) Inventors:
• **WU, Keying
Shanghai 201206 (CN)**
• **ZHANG, Xiaobo
Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS FOR NODE USED FOR WIRELESS COMMUNICATION**

(57) Disclosed in the present application are a method and apparatus for a node used for wireless communication. A first node receives a first information block, receives first signaling, and receives a first signal. The first information block is used for determining a first frequency domain resource and a second frequency domain resource, the first frequency domain resource is orthogonal to the second frequency domain resource, and the first frequency domain resource and the second frequency domain resource are discontinuous. The first signaling indicates scheduling information of the first signal. The first signal occupies a first RB group and a second RB group, the first RB group belongs to the first frequency domain resource, and the second RB group belongs to the second frequency domain resource. Whether same precoding is applied to the first RB group and the second RB group depends on whether a first condition is satisfied. The first condition is related to both the first RB group and the second RB group. The method realizes a more flexible precoding scheme, and improves the transmission performance and the system performance.

FIG. 1

## Description

## Technical Field

The present application relates to a transmission method and apparatus in a wireless communication system, in particular to a transmission method and apparatus for wireless signals in a wireless communication system supporting a cellular network.

## Background Art

In an existing NR (New Radio) system, spectrum resources are divided into an FDD (Frequency Division Duplexing) spectrum and a TDD (Time Division Duplexing) spectrum. For the TDD spectrum, both a base station and user equipment (UE) operate in a half-duplex mode. Such a half-duplex mode avoids self-interference and can alleviate the impact of cross link interference, but it also brings about a decrease in resource utilization rate and an increase in latency. In response to these problems, supporting a flexible duplex mode or a variable link direction (an uplink or a downlink or flexible) on the TDD spectrum or the FDD spectrum becomes a possible solution. In the 3GPP (3rd Generation Partner Project) RAN (Radio Access Network) #88e meeting and a 3GPP R (Release)-18 workshop, supporting a more flexible duplex mode or a full-duplex mode in NR R-18 has received extensive attention and discussion, especially a subband non-overlapping full duplex (SBFD) mode at a gNB (NR node B) side. In this mode, the same symbol will be used for an uplink in part of frequency resources and used for a downlink in another part of the frequency resources, and therefore resource utilization is improved and delay is reduced. In order to reduce interference, the frequency resources for an uplink will be configured in the middle of the frequency resources for a downlink, thereby dividing the frequency resources for a downlink into two discontinuous parts.

## Summary of the Invention

The applicant has found through research that when a PDSCH (Physical Downlink Shared Channel) is assigned resources in two discontinuous frequency domain resources, how to design precoding in the two frequency domain resources is a problem that needs to be solved. In view of the above problems, the present application discloses a solution. It should be noted that although the above description uses more flexible duplex modes, full-duplex modes, and SBFD scenarios as examples, the present application can also be applied to other duplex mode scenarios. Furthermore, using a unified design scheme for different scenarios (including but not limited to more flexible duplex modes, full-duplex modes, SBFD modes, half-duplex modes, and traditional duplex modes) is also conducive to reducing the hardware complexity and costs. In the absence of conflicts, the embodiments and features in the embodiments in any node of the present application may be applied to any other node. In the absence of conflicts, the embodiments and features in the embodiments of the present application may be arbitrarily combined with each other.

As one embodiment, the interpretation of the terminology in the present application is based on the definitions provided in the TS36 series of the 3GPP specifications.

As one embodiment, the interpretation of the terminology in the present application is based on the definitions provided in the TS38 series of the 3GPP specifications.

As one embodiment, the interpretation of the terminology in the present application is based on the definitions provided in the TS37 series of the 3GPP specifications.

As one embodiment, the interpretation of the terminology in the present application is based on the definition of the specification protocol of the Institute of Electrical and Electronics Engineers (IEEE).

The present application discloses a method in a first node used for wireless communication, characterized by comprising:

receiving a first information block, the first information block being used for determining a first frequency domain resource and a second frequency domain resource, the first frequency domain resource and the second frequency domain resource respectively comprising at least one RB, the first frequency domain resource and the second frequency domain resource being orthogonal to each other, and the first frequency domain resource and the second frequency domain resource being discontinuous;
receiving first signaling, the first signaling indicating scheduling information of a first signal; and
receiving the first signal,
wherein the first signal occupies a first RB group and a second RB group, the first RB group belongs to the first frequency domain resource, and the second RB group belongs to the second frequency domain resource; whether same precoding is applied to the first RB group and the second RB group depends on whether a first condition is satisfied; when the first condition is satisfied, the same precoding is applied to the first RB group and the second RB group; and the first condition is related to both the first RB group and the second RB group.

As one embodiment, when the first signal is assigned RBs located in the first frequency domain resource and the second frequency domain resource that are discontinuous, whether the first signal uses the same precoding in the first frequency domain resource and the second frequency domain resource is a problem that needs to be solved. The above method solves this problem by using the first condition related to both the first RB group and the second RB group to determine whether the same precoding is applied.

As one embodiment, the benefits of the above method comprise: a more flexible precoding scheme, and enhanced transmission performance.

As one embodiment, the benefits of the above method comprises: saving signaling overhead.

According to one aspect of the present application, it is characterized in that the first condition comprises: the sum of the number of RBs included in the first RB group and the number of RBs included in the second RB group is greater than a first threshold.

As one embodiment, the benefits of the above method comprise: making the precoding granularity of the first signal more matched with the size of assigned frequency domain resources.

As one embodiment, the benefits of the above method comprise: optimizing the precoding granularity, and improving system performance.

According to one aspect of the present application, it is characterized in that the first condition comprises: the number of RBs spaced between the first RB group and the second RB group is less than a second threshold.

As one embodiment, the benefits of the above method comprise: reducing the requirements on the capabilities of the UE side.

As one embodiment, the benefits of the above method comprise: simplifying hardware complexity.

According to one aspect of the present application, it is characterized in that the first condition comprises: the number of RBs included from a first RB to a second RB is greater than a third threshold, wherein the first RB is the lowest RB in the first RB group and the second RB group, and the second RB is the highest RB in the first RB group and the second RB group.

As one embodiment, the benefits of the above method comprise: having good backward compatibility.

As one embodiment, the benefits of the above method comprise: small changes to existing standards, thereby simplifying implementation complexity.

According to one aspect of the present application, it is characterized in that when the first condition is not satisfied, the precoding granularity of the first RB group depends on at least the former of the number of RBs included in the first frequency domain resource and the number of RBs included in the second frequency domain resource.

As one embodiment, the benefits of the above method comprise: making the precoding granularity more matched with the size of configured frequency domain resources for downlink, thereby improving system performance.

According to one aspect of the present application, characterized by comprising:

receiving a second information block, the second information block being used for determining a first time domain resource,
wherein the first signal overlaps with the first time domain resource in a time domain.

As one embodiment, the problem to be solved by the present application comprises: when the first signal occupies symbols in the first time domain resource, how to determine the precoding of the first signal.

As one embodiment, the problem to be solved by the present application comprises: when the first signal occupies symbols in the first time domain resource and is assigned resources in the first frequency domain resource and the second frequency domain resource that are discontinuous, how to determine whether the same precoding is applied to part of the first signal in the first frequency domain resource and the second frequency domain resource. In the above method, whether the same precoding is used depends on the first condition related to the RBs assigned in the first frequency domain resource and the second frequency domain resource, which solves this problem.

According to one aspect of the present application, it is characterized in that only when each condition in a second condition set is satisfied, whether the same precoding is applied to the first RB group and the second RB group depends on whether the first condition is satisfied; and the second condition set comprises at least one condition.

As one embodiment, the benefits of the above method comprise: more flexibly configuring whether the first signal uses the same precoding in the first RB group and the second RB group according to actual needs, thereby improving transmission performance.

As one embodiment, the benefits of the above method comprise: more flexibly configuring whether the first signal uses the same precoding in the first RB group and the second RB group according to UE capabilities, and better supporting UEs with different capabilities.

According to one aspect of the present application, it is characterized in that the first node is user equipment.

According to one aspect of the present application, it is characterized in that the first node is a relay node.

The present application discloses a method in a second node used for wireless communication, characterized by comprising:

transmitting a first information block, the first information block being used for determining a first frequency domain resource and a second frequency domain resource, the first frequency domain resource and the second frequency domain resource respectively comprising at least one RB, the first frequency domain resource and the second frequency domain resource being orthogonal to each other, and the first frequency domain resource and the second frequency domain resource being discontinuous;
transmitting first signaling, the first signaling indicating scheduling information of a first signal; and
transmitting the first signal,
wherein the first signal occupies a first RB group and a second RB group, the first RB group belongs to the first frequency domain resource, and the second RB group belongs to the second frequency domain resource; whether the same precoding is applied to the first RB group and the second RB group depends on whether a first condition is satisfied; when the first condition is satisfied, the same precoding is applied to the first RB group and the second RB group; the first condition is related to both the first RB group and the second RB group.

According to one aspect of the present application, it is characterized in that the first condition comprises: the sum of the number of RBs included in the first RB group and the number of RBs included in the second RB group is greater than a first threshold.

According to one aspect of the present application, it is characterized in that the first condition comprises: the number of RBs spaced between the first RB group and the second RB group is less than a second threshold.

According to one aspect of the present application, it is characterized in that the first condition comprises: the number of RBs included from a first RB to a second RB is greater than a third threshold, wherein the first RB is the lowest RB in the first RB group and the second RB group, and the second RB is the highest RB in the first RB group and the second RB group.

According to one aspect of the present application, it is characterized in that when the first condition is not satisfied, the precoding granularity of the first RB group depends on at least the former of the number of RBs included in the first frequency domain resource and the number of RBs included in the second frequency domain resource.

According to one aspect of the present application, characterized by comprising:

transmitting a second information block, the second information block being used for determining a first time domain resource,
wherein the first signal overlaps with the first time domain resource in a time domain.

According to one aspect of the present application, it is characterized in that only when each condition in a second condition set is satisfied, whether the same precoding is applied to the first RB group and the second RB group depends on whether the first condition is satisfied; and the second condition set comprises at least one condition.

According to one aspect of the present application, it is characterized in that the second node is a base station.

According to one aspect of the present application, it is characterized in that the second node is user equipment.

According to one aspect of the present application, it is characterized in that the second node is a relay node.

The present application discloses a first node used for wireless communication, characterized by comprising:

a first receiver receiving a first information block, the first information block being used for determining a first frequency domain resource and a second frequency domain resource, the first frequency domain resource and the second frequency domain resource respectively comprising at least one RB, the first frequency domain resource and the second frequency domain resource being orthogonal to each other, and the first frequency domain resource and the second frequency domain resource being discontinuous;
the first receiver receiving first signaling, the first signaling indicating scheduling information of a first signal; and
the first receiver receiving the first signal,
wherein, the first signal occupies a first RB group and a second RB group, the first RB group belongs to the first frequency domain resource, and the second RB group belongs to the second frequency domain resource; whether the same precoding is applied to the first RB group and the second RB group depends on whether the first condition is satisfied; when the first condition is satisfied, the same precoding is applied to the first RB group and the second RB group; the first condition is related to both the first RB group and the second RB group.

The present application discloses a second node used for wireless communication, characterized by comprising:

a first transmitter transmitting a first information block, the first information block being used for determining a first frequency domain resource and a second frequency domain resource, the first frequency domain resource and the second frequency domain resource respectively comprising at least one RB, the first frequency domain resource and the second frequency domain resource being orthogonal to each other, and the first frequency domain resource and the second frequency domain resource being discontinuous;
the first transmitter transmitting first signaling, the first signaling indicating scheduling information of a first signal; and
the first transmitter transmitting the first signal,

wherein, the first signal occupies a first RB group and a second RB group, the first RB group belongs to the first frequency domain resource, and the second RB group belongs to the second frequency domain resource; whether the same precoding is applied to the first RB group and the second RB group depends on whether the first condition is satisfied; when the first condition is satisfied, the same precoding is applied to the first RB group and the second RB group; the first condition is related to both the first RB group and the second RB group.

As one embodiment, compared with the traditional solution, the present application has the following advantages:

the transmission performance and the system performance are improved by a more flexible precoding scheme;
the signaling overhead is saved;
the implementation complexity is reduced;
the needs of UEs with different capabilities are satisfied.

**Brief Description of the Drawings**

Other features, purposes and advantages of the present application will become more apparent from reading the detailed description of the non-limiting embodiments made with reference to the following drawings:

FIG. 1 shows a flowchart of a first information block, first signaling, and a first signal according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows transmission between a first node and a second node according to one embodiment of the present application;
FIG. 6 shows a schematic diagram of a first frequency domain resource and a second frequency domain resource according to one embodiment of the present application;
FIG. 7 shows a schematic diagram of a first frequency domain resource, a second frequency domain resource, and a first BWP according to one embodiment of the present application;
FIG. 8 shows a schematic diagram of a first condition according to one embodiment of the present application;
FIG. 9 shows a schematic diagram of a first condition according to one embodiment of the present application;
FIG. 10 shows a schematic diagram of a first condition according to one embodiment of the present application;
FIG. 11 shows a schematic diagram of a precoding granularity of a first RB group when a first condition is not satisfied according to one embodiment of the present application;
FIG. 12 shows a schematic diagram of a precoding granularity of a first RB group when a first condition is not satisfied according to one embodiment of the present application;
FIG. 13 shows a schematic diagram of a second information block according to one embodiment of the present application;
FIG. 14 shows a schematic diagram of a second condition set according to one embodiment of the present application;
FIG. 15 shows a structural block diagram of a processing apparatus used in a first node according to one embodiment of the present application; and
FIG. 16 shows a structural block diagram of a processing apparatus used in a second node according to one embodiment of the present application.

Detailed Description of Embodiments

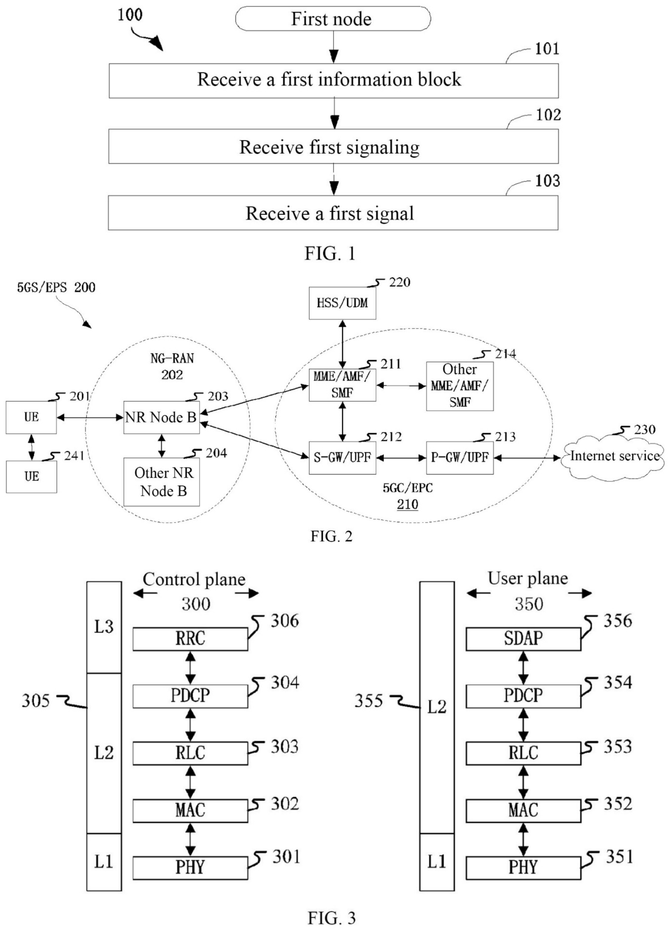

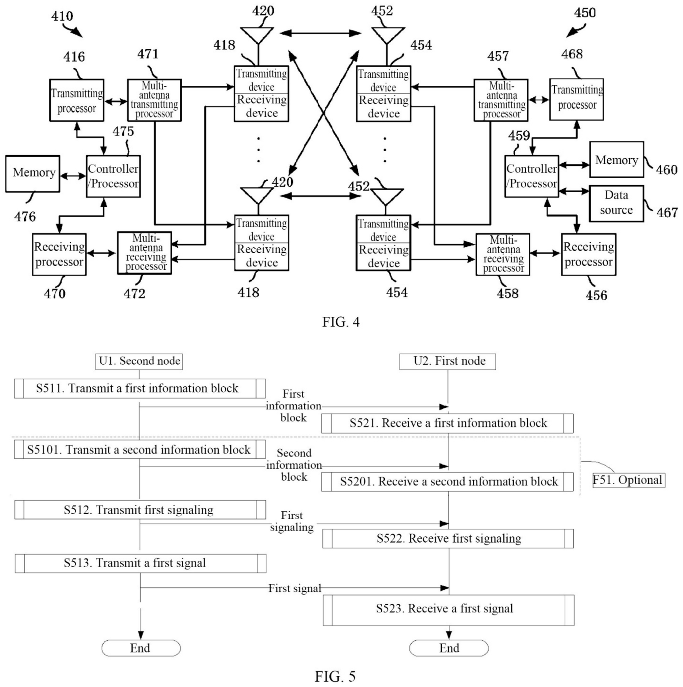

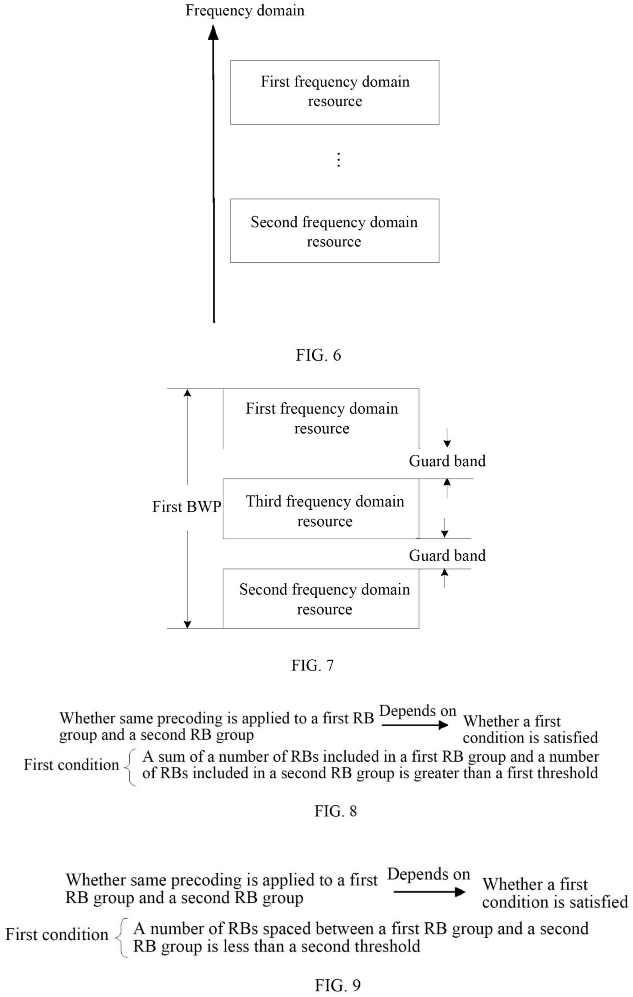

The technical solutions of the present application will be further described in detail below in conjunction with the drawings. It should be noted that, in the absence of conflicts, embodiments and features in the embodiments in the present application may be arbitrarily combined with each other. Based on considerations of flexibility, complexity, overhead, compatibility, etc., those skilled in the art are motivated to flexibly combine the embodiments in different drawings without conflict, such as (but not limited to) the embodiment in FIG. 1 and the embodiments in FIGs. 5 to 14, the embodiment in FIG. 5, and the embodiments in FIGs. 6 to 14, and so on.

Embodiment **1**

Embodiment 1 illustrates a flowchart of a first information block, first signaling, and a first signal according to one embodiment of the present application, as shown in FIG. 1. In 100 shown in FIG. 1, each block represents one step. In particular, the order of the steps in the blocks does not represent a specific temporal order relationship among various steps.
In Embodiment 1, the first node in the present application receives a first information block in step 101; receives first signaling in step 102; and receives a first signal in step 103, wherein the first information block is used for determining a first frequency domain resource and a second frequency domain resource, the first frequency domain resource and the second frequency domain resource respectively comprise at least one RB, the first frequency domain resource and the second frequency domain resource are orthogonal to each other, and the first frequency domain resource and the second frequency domain resource are discontinuous; the first signaling indicates scheduling information of the first signal; the first signal occupies a first RB group and a second RB group; the first RB group belongs to the first frequency domain resource, and the second RB group belongs to the second frequency domain resource; whether the same precoding is applied to the first RB group and the second RB group depends on whether a first condition is satisfied; when the first condition is satisfied, the same precoding is applied to the first RB group and the second RB group; and the first condition is related to both the first RB group and the second RB group.

As one embodiment, the first information block is carried by higher layer signaling.

As one embodiment, the first information block is carried by RRC (Radio Resource Control) signaling.

As one embodiment, the first information block comprises information in all or part of fields in one RRC IE (Information Element).

As one embodiment, the first information block comprises information in all or part of fields in each of a plurality of RRC IEs.

As one embodiment, the first information block comprises information in all or part of fields in a TDD-UL-DL-ConfigCommon IE.

As one embodiment, the first information block comprises information in all or part of fields in a TDD-UL-DL-ConfigDedicated IE.

As one embodiment, the first information block comprises information in all or part of fields in a Serving-CellConfig IE.

As one embodiment, the first information block comprises information in all or part of fields in a Serving-CellConfigCommonSIB IE.

As one embodiment, the first information block comprises information in all or part of fields in a Serving-CellConfigCommon IE.

As one embodiment, the first information block is carried by at least one RRC IE.

As one embodiment, the first information block is carried by a TDD-UL-DL-ConfigCommon IE.

As one embodiment, the first information block is carried by a TDD-UL-DL-ConfigDedicated IE.

As one embodiment, the first information block is carried by a ServingCellConfig IE.

As one embodiment, the first information block is carried by a ServingCellConfigCommonSIB IE.

As one embodiment, the first information block is carried by a ServingCellConfigCommon IE.

As one embodiment, the first information block is carried by a MAC CE (Medium Access Control Layer Control Element).

As one embodiment, the first information block comprises a MAC CE.

As one embodiment, the first information block is carried by DCI (Downlink control information).

As one embodiment, the first information block comprises DCI.

As one embodiment, the first information block comprises information in one or more fields in one DCI.

As one embodiment, the first information block is carried by DCI format 2_0.

As one embodiment, the first information block comprises DCI format 2_0.

As one embodiment, the first information block is carried by RRC signaling and the MAC CE.

As one embodiment, the first information block is carried by higher layer signaling and DCI.

As one embodiment, the RB (Resource Block) comprises a PRB (Physical Resource Block).

As one embodiment, the RB refers to a PRB.

As one embodiment, the RB comprises a VRB (Virtual Resource Block).

As one embodiment, the RB refers to a VRB.

As one embodiment, the RB comprises a CRB (Common Resource Block).

As one embodiment, the RB refers to a CRB.

As one embodiment, the first frequency domain resource is one continuous frequency domain resource.

As one embodiment, the first frequency domain resource comprises a plurality of RBs.

As one embodiment, the first frequency domain resource comprises a plurality of continuous RBs.

As one embodiment, the first frequency domain resource comprises a plurality of continuous PRBs.

As one embodiment, the first frequency domain resource is composed of a plurality of continuous RBs.

As one embodiment, the first frequency domain resource is composed of a plurality of continuous PRBs.

As one embodiment, the first frequency domain resource does not comprise a guard band.

As one embodiment, the second frequency domain resource is one continuous frequency domain resource.

As one embodiment, the second frequency domain resource comprises a plurality of RBs.

As one embodiment, the second frequency domain resource comprises a plurality of continuous RBs.

As one embodiment, the second frequency domain resource comprises a plurality of continuous PRBs.

As one embodiment, the second frequency domain resource is composed of a plurality of continuous RBs.

As one embodiment, the second frequency domain resource is composed of a plurality of continuous PRBs.

As one embodiment, the second frequency domain resource does not comprise a guard band.

As one embodiment, a number of RBs included in the first frequency domain resource is equal to a number of RBs included in the second frequency domain resource.

As one embodiment, a number of RBs included in the first frequency domain resource is not equal to a number of RBs included in the second frequency domain resource.

As one embodiment, there exists at least one RB between the first frequency domain resource and the second frequency domain resource.

As one embodiment, there exists at least one guard band between the first frequency domain resource and the second frequency domain resource.

As one embodiment, the first frequency domain resource and the second frequency domain resource being discontinuous refers to: there exists at least one RB between the first frequency domain resource and the second frequency domain resource that belongs neither to the first frequency domain resource nor to the second frequency domain resource.

As one embodiment, the first frequency domain resource is configured for a downlink.

As one embodiment, the second frequency domain resource is configured for a downlink.

As one embodiment, the first frequency domain resource is used for a downlink.

As one embodiment, the second frequency domain resource is used for a downlink.

As one embodiment, the first information block indicates that both the first frequency domain resource and the second frequency domain resource are used for a downlink.

As one embodiment, the characteristics of the above method comprise: the first frequency domain resource and the second frequency domain resource are respectively two subbands used for a downlink.

As one embodiment, the characteristics of the above method comprise: the first frequency domain resource and the second frequency domain resource are respectively two subbands used for a downlink in an SBFD symbol.

As one embodiment, the problem to be solved by the above method comprises: when the first signal is assigned with frequency domain resources in two discontinuous subbands, how to determine whether same precoding is applied to part of the first signal in these two subbands. In the above method, whether the same precoding is used depends on the first condition related to the frequency domain resources assigned in the two subbands, which solves this problem.

As one embodiment, the first frequency domain resource and the second frequency domain resource belong to a same BWP (Bandwidth Part).

As one embodiment, the first frequency domain resource and the second frequency domain resource belong to a same cell.

As one embodiment, the first frequency domain resource and the second frequency domain resource belong to a same carrier.

As one embodiment, the first information block indicates the first frequency domain resource and the second frequency domain resource.

As one embodiment, the first information block explicitly indicates the first frequency domain resource and the second frequency domain resource.

As one embodiment, the first information block indicates a starting RB of the first frequency domain resource.

As one embodiment, the first information block indicates a number of RBs included in the first frequency domain resource.

As one embodiment, the first information block indicates a starting RB of the second frequency domain resource.

As one embodiment, the first information block indicates a number of RBs included in the second frequency domain resource.

As one embodiment, the benefits of the above method comprise: more flexible indication and better forward compatibility.

As one embodiment, the first information block implicitly indicates the first frequency domain resource and the second frequency domain resource.

As one embodiment, the first information block indicates the first frequency domain resource and the second frequency domain resource by indicating a third frequency domain resource.

As one embodiment, the first information block indicates the first frequency domain resource and the second frequency domain resource by indicating a third frequency domain resource and at least one guard band.

As one embodiment, the benefits of the above method comprise: reducing signaling overhead.

As one embodiment, the third frequency domain resource is orthogonal to the first frequency domain resource, and the third frequency domain resource is orthogonal to the second frequency domain resource.

As one embodiment, the third frequency domain resource comprises a plurality of continuous RBs.

As one embodiment, the third frequency domain resource is configured for uplink.

As one embodiment, the third frequency domain resource is used for uplink.

As one embodiment, the first information block indicates a starting RB of the third frequency domain resource.

As one embodiment, the first information block indicates the number of RBs included in the third frequency domain resource.

As one embodiment, the first information block indicates the third frequency domain resource is used for uplink.

As one embodiment, the third frequency domain resource, the first frequency domain resource and the second frequency domain resource all belong to the same BWP.

As one embodiment, the third frequency domain resource, the first frequency domain resource and the second frequency domain resource all belong to the same cell.

As one embodiment, the third frequency domain resource, the first frequency domain resource and the second frequency domain resource all belong to the same carrier.

As one embodiment, both the first frequency domain resource and the second frequency domain resource belong to a first BWP.

As one embodiment, the first frequency domain resource, the second frequency domain resource and the third frequency domain resource all belong to a first BWP.

As one embodiment, the first frequency domain resource and the second frequency domain resource respectively comprise a positive integer number of continuous RBs in a first BWP that do not belong to the third frequency domain resource.

As one embodiment, the first frequency domain resource and the second frequency domain resource respectively comprise a positive integer number of continuous RBs in a first BWP that belong neither to the third frequency domain resource nor to a guard band.

As one embodiment, the first frequency domain resource and the second frequency domain resource are respectively composed of a positive integer number of continuous RBs in a first BWP that do not belong to the third frequency domain resource.

As one embodiment, the first frequency domain resource and the second frequency domain resource are respectively composed of a positive integer number of continuous RBs in a first BWP that belong neither to the third frequency domain resource nor to a guard band.

As one embodiment, the first BWP is one downlink BWP.

As one embodiment, the first BWP is an active downlink BWP.

As one embodiment, the first BWP is a BWP where the first signal is located.

As one embodiment, the first BWP is a BWP where the first signaling is located.

As one embodiment, the first BWP is a BWP indicated by the first signaling.

As one embodiment, the first BWP comprises a plurality of continuous RBs, and the RBs in the first BWP are sequentially numbered.

As one embodiment, the RBs in the first BWP are sequentially numbered from low to high in the frequency domain.

As one embodiment, the RBs in the first BWP are sequentially numbered from low to high according to frequencies of occupied frequency domain resources.

As one embodiment, the first frequency domain resource is lower than the second frequency domain resource in the frequency domain.

As one embodiment, any RB in the first frequency domain resource is lower than any RB in the second frequency domain resource in the frequency domain.

As one embodiment, a serial number of any RB in the first frequency domain resource is less than a serial number of any RB in the second frequency domain resource.

As one embodiment, the first frequency domain resource is higher than the second frequency domain resource in the frequency domain.

As one embodiment, any RB in the first frequency domain resource is higher than any RB in the second frequency domain resource in the frequency domain.

As one embodiment, a serial number of any RB in the first frequency domain resource is greater than a serial number of any RB in the second frequency domain resource.

As one embodiment, serial numbers of all RBs in the first frequency domain resource are continuous.

As one embodiment, serial numbers of all RBs in the second frequency domain resource are continuous.

As one embodiment, serial numbers of RBs of the first frequency domain resource and the second frequency domain resource are discontinuous.

As one embodiment, a serial number of the RB refers to: a CRB serial number.

As one embodiment, a serial number of the RB refers to: a PRB serial number.

As one embodiment, the first signaling comprises DCI.

As one embodiment, the first signaling is one piece of DCI.

As one embodiment, the first signaling comprises RRC signaling.

As one embodiment, the first signaling comprises a MAC CE.

As one embodiment, the first signaling is one piece of DCI, and the first signaling does not comprise DCI field VRB-to-PRB mapping.

As one embodiment, the first signaling is one piece of DCI, and a DCI field VRB-to-PRB mapping of the first signaling indicates that mapping from a VRB to a PRB is non-interleaved mapping.

As one embodiment, the first signal comprises a baseband signal.

As one embodiment, the first signal comprises a wireless signal.

As one embodiment, the first signal comprises a radio frequency signal.

As one embodiment, the first signal carries one TB (Transport Block).

As one embodiment, the scheduling information comprises one or more of a time domain resource, a frequency domain resource, an MCS (Modulation and Coding Scheme), a DMRS (DeModulation Reference Signals) port, a HARQ (Hybrid Automatic Repeat Request) process number, an RV (Redundancy Version), an NDI (New Data Indicator), a TCI state, or an SRI (Sounding Reference Signal Resource Indicator).

As one embodiment, the first RB group comprises one RB or a plurality of continuous RBs.

As one embodiment, the second RB group comprises one RB or a plurality of continuous RBs.

As one embodiment, the first RB group comprises one PRB or a plurality of continuous PRBs.

As one embodiment, the second RB group comprises one PRB or a plurality of continuous PRBs.

As one embodiment, each RB in the first RB group is one PRB, and each RB in the second RB group is one PRB.

As one embodiment, each RB in the first RB group is mapped to one CRB, and each RB in the second RB group is mapped to one CRB.

As one embodiment, each RB in the first RB group is mapped to one VRB, and each RB in the second RB group is mapped to one VRB.

As one embodiment, each RB in the first RB group corresponds to one CRB serial number and one PRB serial number, and each RB in the second RB group corresponds to one CRB serial number and one PRB serial number.

As one embodiment, each RB in the first RB group corresponds to one VRB serial number, and each RB in the second RB group corresponds to one VRB serial number.

As one embodiment, a relationship between PRB serial numbers and CRB serial numbers corresponding to any RB in the first RB group and any RB in the second RB group is: $n_{CRB} = n_{PRB} + N_{BWP}^{start}$, wherein $n_{CRB}$ is a CRB serial number of this RB, $n_{PRB}$ is a PRB serial number of this RB, and $N_{BWP}^{start}$ is a starting CRB relative to a CRB 0 of a BWP to which the first RB group and the second RB group belong.

As one embodiment, a relationship between PRB serial numbers and CRB serial numbers corresponding to any RB in the first RB group and any RB in the second RB group refers to 4.4.4.4 of 3GPP TS 38.211.

As one embodiment, a relationship between PRB serial numbers and VRB serial numbers corresponding to any RB in the first RB group and any RB in the second RB group refers to 7.3.1.6 or 6.3.1.7 of 3GPP TS 38.211.

As one embodiment, each RB in the first RB group belongs to the first frequency domain resource, and each RB in the second RB group belongs to the second frequency domain resource.

As one embodiment, frequency domain resources assigned to the first signal are the first RB group and the second RB group.

As one embodiment, the first signal does not occupy RBs other than the first RB group and the second RB group.

As one embodiment, any RB occupied by the first signal belongs to the first RB group or belongs to the second RB group.

As one embodiment, the first signal occupies each RB in the first RB group and each RB in the second RB group.

As one embodiment, frequency domain resources occupied by the first signal are the first RB group and the second RB group.

As one embodiment, the first signaling indicates the first RB group and the second RB group.

As one embodiment, a DCI field Frequency Domain Resource Assignment in the first signaling indicates the first RB group and the second RB group.

As one embodiment, the first signaling indicates a starting RB of the first RB group.

As one embodiment, the first signaling indicates a number of RBs included in the first RB group.

As one embodiment, the first signaling indicates a starting RB of the second RB group.

As one embodiment, the first signaling indicates a number of RBs included in the second RB group.

As one embodiment, the first signaling indicates a starting VRB among one group of VRBs mapped by the first RB group.

As one embodiment, the first signaling indicates a number of VRBs included in one group of VRBs mapped by the first RB group.

As one embodiment, the first signaling indicates a starting VRB among one group of VRBs mapped by the second RB group.

As one embodiment, the first signaling indicates a number of VRBs included in one group of VRBs mapped by the second RB group.

As one embodiment, the benefits of the above method comprise: more flexible signaling indication, avoidance of ambiguity between the UE and a base station, and better forward compatibility.

As one embodiment, the first signaling indicates a lowest RB in the first RB group and the second RB group.

As one embodiment, any RB in the first RB group is not lower than the lowest RB, and any RB in the second RB group is not lower than the lowest RB.

As one embodiment, the lowest RB refers to: an RB with a smallest VRB serial number.

As one embodiment, the lowest RB refers to: an RB with a smallest PRB serial number.

As one embodiment, the lowest RB refers to: an RB with a smallest CRB serial number.

As one embodiment, the lowest RB refers to: an RB occupying a frequency domain resource with a lowest frequency.

As one embodiment, the first signaling indicates a first length, and the first length is used for determining a serial number of a highest RB in the first RB group and the second RB group.

As one sub-embodiment of the above embodiment, the first length and a serial number of the lowest RB are jointly used for determining a serial number of the highest RB.

As one sub-embodiment of the above embodiment, a serial number of the highest RB is equal to a serial number of the lowest RB plus the first length.

As one sub-embodiment of the above embodiment, a serial number of the highest RB is equal to a serial number of the lowest RB plus the first length minus 1.

As one embodiment, any RB in the first RB group is not higher than the highest RB, and any RB in the second RB group is not higher than the highest RB.

As one embodiment, the highest RB refers to: a RB with a largest VRB serial number.

As one embodiment, the highest RB refers to: a RB with a largest PRB serial number.

As one embodiment, the highest RB refers to: a RB with a largest CRB serial number.

As one embodiment, the highest RB refers to: an RB occupying a frequency domain resource with the highest frequency.

As one embodiment, the benefits of the above method comprise: reducing the signaling overhead and having better backward compatibility.

As one embodiment, a serial number of the lowest RB and a serial number of the highest RB both refer to: PRB serial numbers.

As one embodiment, a serial number of the lowest RB and a serial number of the highest RB both refer to: VRB serial numbers.

As one embodiment, a serial number of the lowest RB and a serial number of the highest RB both refer to: CRB serial numbers.

As one embodiment, the PRB serial number refers to: $n_{PRB}^{\mu}$, and the $\mu$ is a subcarrier spacing configuration.

As one embodiment, the definition of the $n_{PRB}^{\mu}$ refers to 3GPP TS38.211.

As one embodiment, the CRB serial number refers to: $n_{CRB}^{\mu}$, and the $\mu$ is a subcarrier spacing configuration.

As one embodiment, the definition of the $n_{CRB}^{\mu}$ refers to 3GPP TS38.211.

As one embodiment, a subcarrier spacing configuration of a BWP where the first signal is located is $\mu$.

As one embodiment, CRBs are numbered upward starting from 0 in the frequency domain.

As one embodiment, PRBs in one BWP are numbered from 0 to Nw-1, and the Nw is the number of PRBs included in the one BWP.

As one embodiment, VRBs in one BWP are numbered from 0 to Nw-1, and the Nw is the number of PRBs included in the one BWP.

As one embodiment, PRBs in a BWP i $n_{PRB}^{\mu}$ are mapped to a CRB $n_{CRB}^{\mu}$, and a relationship between a PRB $n_{PRB}^{\mu}$ BWP i and a CRB $n_{CRB}^{\mu}$ is $n_{CRB}^{\mu} = n_{PRB}^{\mu} + N_{BWP,i}^{start,\mu}$, wherein $N_{BWP,i}^{start,\mu}$ is a starting CRB relative to a CRB 0 in the BWP i.

As one embodiment, for a mapping relationship from a PRB to a CRB, refer to 4.4.4.4 of 3GPP TS 38.211.

As one embodiment, for a mapping relationship from a PRB to a CRB, refer to 7.3.1.6 or 6.3.1.7 of 3GPP TS 38.211.

As one embodiment, one RB being not higher/not lower than another RB in the frequency domain refers to: a serial number of the one RB is not greater than/not less than a serial number of another RB.

As one embodiment, one RB being not higher/not lower than another RB in the frequency domain refers to: a CRB serial number of the one RB is not greater than/not less than a CRB serial number of another RB.

As one embodiment, one RB being not higher/not lower than another RB in the frequency domain refers to: a PRB serial number of the one RB is not greater than/not less than a PRB serial number of another RB.

As one embodiment, one RB being not higher/not lower than another RB in the frequency domain refers to: a frequency of a frequency domain resource occupied by the one RB is not higher than/not lower than a frequency of a frequency domain resource occupied by another RB.

As one embodiment, the meaning of the sentence that whether the same precoding is applied to the first RB group and the second RB group comprises: whether the first node assumes that the same precoding is applied to the first RB group and the second RB group.

As one embodiment, the meaning of the sentence of whether the same precoding is applied to the first RB group and the second RB group comprises: whether the first node may assume that the same precoding is applied to the first RB group and the second RB group.

As one embodiment, the meaning of the sentence of whether the same precoding is applied to the first RB group and the second RB group comprises: whether the first node expects the same precoding to be applied to the first RB group and the second RB group.

As one embodiment, the meaning of the sentence of whether the same precoding is applied to the first RB group and the second RB group comprises: whether the same precoding is applied to part of the first signal transmitted in the first RB group and part of the first signal transmitted in the second RB group.

As one embodiment, the meaning of the sentence of whether the same precoding is applied to the first RB group and the second RB group comprises: whether the first node assumes that the same precoding is applied to part of the first signal transmitted in the first RB group and part of the first signal transmitted in the second RB group.

As one embodiment, the meaning of the sentence of whether the same precoding is applied to the first RB group and the second RB group comprises: whether the first node may assume that the same precoding is applied to part of the first signal transmitted in the first RB group and part of the first signal transmitted in the second RB group.

As one embodiment, the meaning of the sentence of whether the same precoding is applied to the first RB group and the second RB group comprises: whether the first node expects the same precoding to be applied to part of the first signal transmitted in the first RB group and part of the first signal transmitted in the second RB group.

As one embodiment, the same precoding is applied to the first RB group and the second RB group.

As one embodiment, the meaning that the same precoding is applied to the first RB group and the second RB group comprises: the first node assumes that the same precoding is applied to the first RB group and the second RB group.

As one embodiment, the meaning that the same precoding is applied to the first RB group and the second RB group comprises: the first node may assume that the same precoding is applied to the first RB group and the second RB group.

As one embodiment, the meaning that the same precoding is applied to the first RB group and the second RB group comprises: the first node expects the same precoding to be applied to the first RB group and the second RB group.

As one embodiment, the meaning that the same precoding is applied to the first RB group and the second RB group comprises: the same precoding is applied to part of the first signal transmitted in the first RB group and part of the first signal transmitted in the second RB group.

As one embodiment, the meaning that same precoding is applied to the first RB group and the second RB group comprises: the first node assumes that the same precoding is applied to part of the first signal transmitted in the first RB group and part of the first signal transmitted in the second RB group.

As one embodiment, the meaning that the same precoding is applied to the first RB group and the second RB group comprises: the first node may assume that the same precoding is applied to part of the first signal transmitted in the first RB group and part of the first signal transmitted in the second RB group.

As one embodiment, the meaning that the same precoding is applied to the first RB group and the second RB group comprises: the first node expects the same precoding to be applied to part of the first signal transmitted in the first RB group and part of the first signal transmitted in the second RB group.

As one embodiment, different precoding is applied to the first RB group and the second RB group.

As one embodiment, the meaning that different precoding is applied to the first RB group and the second RB group comprises: the first node does not assume that the same precoding is applied to the first RB group and the second RB group.

As one embodiment, the meaning that different precoding is applied to the first RB group and the second RB group comprises: the first node may not assume that the same precoding is applied to the first RB group and the second RB group.

As one embodiment, the meaning that different precoding is applied to the first RB group and the second RB group comprises: the first node assumes that different precoding is applied to the first RB group and the second RB group.

As one embodiment, the meaning that different precoding is applied to the first RB group and the second RB group comprises: the first node does not expect the same precoding to be applied to the first RB group and the second RB group.

As one embodiment, the meaning that different precoding is applied to the first RB group and the second RB group comprises: different precoding is applied to the part of the first signal transmitted in the first RB group and the part of the first signal transmitted in the second RB group.

As one embodiment, the meaning that different precoding is applied to the first RB group and the second RB group comprises: the first node does not assume that the same precoding is applied to part of the first signal transmitted in the first RB group and part of the first signal transmitted in the second RB group.

As one embodiment, the meaning that different precoding is applied to the first RB group and the second RB group comprises: the first node may not assume that the same precoding is applied to part of the first signal transmitted in the first RB group and part of the first signal transmitted in the second RB group.

As one embodiment, the meaning that different precoding is applied to the first RB group and the second RB group comprises: the first node does not expect the same precoding to be applied to part of the first signal transmitted in the first RB group and part of the first signal transmitted in the second RB group.

As one embodiment, when the same precoding is applied to the first RB group and the second RB group, the first node may use joint channel estimation for the first RB group and the second RB group.

As one embodiment, when different precoding is applied to the first RB group and the second RB group, the first node may not use joint channel estimation for the first RB group and the second RB group.

As one embodiment, only when the first condition is satisfied, the same precoding is applied to the first RB group and the second RB group.

As one embodiment, when and only when the first condition is satisfied, the same precoding is applied to the first RB group and the second RB group.

As one embodiment, when the first condition is satisfied, the same precoding is applied to all RBs in the first RB group and all RBs in the second RB group.

As one embodiment, when the first condition is not satisfied, different precoding is applied to the first RB group and the second RB group.

As one embodiment, the first condition is related to both the number of RBs included in the first RB group and the number of RBs included in the second RB group.

## Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced) and future 5G systems. The network architecture 200 of the LTE, LTE-A and future 5G systems is referred to as an EPS (Evolved Packet System) 200. The 5G NR or LTE network architecture 200 may be referred to as a 5GS (5G System)/EPS (Evolved Packet System) 200 or some other suitable terminology. The 5GS/EPS 200 may comprise one or more UE (User Equipment) 201, one UE241 performing Sidelink communication with the UE201, an NG-RAN (Next Generation Radio Access Network) 202, a 5GC (5G Core Network)/EPC (Evolved Packet Core) 210, an HSS (Home Subscriber Server)/UDM (Unified Data Management) 220, and an Internet service 230. The 5GS/EPS200 may be interconnected with other access networks, but for simplicity, these entities/interfaces are not shown. As shown in FIG. 2, the 5GS/EPS200 provides a packet switching service, but those skilled in the art will readily appreciate that various concepts presented throughout the present application may be extended to networks providing a circuit switching service. The NG-RAN202 comprises an NR (New Radio) Node B (gNB) 203 and other gNB204. The gNB203 provides user and control plane protocol termination toward the UE201. The gNB203 may be connected to other gNB204 via an Xn interface (e.g., backhaul). The gNB203 may also be referred to as a base station, a base transceiver station, a radio base station, a radio transceiver, a transceiver function, a basic service set (BSS), an extended service set (ESS), a TRP (Transmitter Receiver Point), or some other suitable terminology. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, a car, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminology. The gNB203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Date Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocal) packets are conveyed through the S-GW/UPF212, and the S-GW/UPF212 itself is connected to the P-GW/UPF213. The P-GW provides UE IP address assignment and other functions. The P-GW/UPF213 is connected to the Internet service 230. The Internet service 230 comprises operator-corresponding Internet protocol services, which may specifically comprise the Internet, an intranet, an IMS (IP Multimedia Subsystem), and a packet switching service.

As one embodiment, the first node in the present application comprises the UE201.

As one embodiment, the second node in the present application comprises the gNB203.

As one embodiment, a wireless link between the UE201 and the gNB203 comprises a cellular network link.

As one embodiment, a sender of the first information block comprises the gNB203.

As one embodiment, a recipient of the first information block comprises the UE201.

As one embodiment, a sender of the first signaling comprises the gNB203.

As one embodiment, a recipient of the first signaling comprises the UE201.

As one embodiment, a sender of the first signal comprises the gNB203.

As one embodiment, a recipient of the first signal comprises the UE201.

As one embodiment, the gNB203 supports SBFD.

As one embodiment, the gNB203 supports a more flexible duplex mode or a full-duplex mode.

As one embodiment, the UE201 supports SBFD.

As one embodiment, the UE201 supports a more flexible duplex mode or a full-duplex mode.

## Embodiment 3

Embodiment 3 illustrates a schematic diagram of an embodiment of a radio protocol architecture for a user plane and a control plane according to one embodiment of the present application, as shown in FIG. 3.

Embodiment 3 shows a schematic diagram of an embodiment of one radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture of the control plane 300 used between a first communication node device (UE, gNB or RSU in V2X) and a second communication node device (gNB, UE or RSU in V2X), or between two pieces of UE using three layers: Layer 1, Layer 2, and Layer 3. The Layer 1 (L1 layer) is the lowest layer and implements various PHY (Physical Layer) signal processing functions. The L1 layer will be referred to as PHY301 herein. The Layer 2 (L2 layer) 305 is above the PHY301, and is responsible for a link between the first communication node device and the second communication node device, or between two pieces of UE. The L2 layer 305 comprises a MAC (Medium Access Control) sublayer 302, an RLC (Radio Link Control) sublayer 303, and a PDCP (Packet Data Convergence Protocol) sublayer 304, with these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper-layer data packets, retransmission of lost data packets, and reordering of data packets to compensate for out-of-order reception due to HARQ. The MAC sublayer 302 provides multiplexing between logical and transport channels. The MAC sublayer 302 is also responsible for assigning various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using RRC signaling between the second communication node device and the first communication node device. The radio protocol architecture for the user plane 350 comprises a Layer 1 (L1 layer) and a Layer 2 (L2 layer). The radio protocol architecture for the first communication node device and the second communication node device in the user plane 350 is substantially the same as that for corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper-layer data packets to reduce the radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, comprising a network layer (e.g., an IP layer) terminating at the P-GW on a network side and an application layer terminating at another end (e.g., a remote UE, a server, etc.) of a connection.

As one embodiment, the radio protocol architecture in FIG. 3 is applicable to the first node in the present application.

As one embodiment, the radio protocol architecture in FIG. 3 is applicable to the second node in the present application.

As one embodiment, the first information block is generated at the RRC sublayer 306.

As one embodiment, the first information block is generated at the MAC sublayer 302 or the MAC sublayer 352.

As one embodiment, the first information block is generated at the PHY301 or the PHY351.

As one embodiment, the first signaling is generated at the PHY301 or the PHY351.

As one embodiment, the first signaling is generated at the MAC sublayer 302 or the MAC sublayer 352.

As one embodiment, the first signal is generated at the PHY301 or the PHY351.

As one embodiment, the first signal is generated at the MAC sublayer 302 or the MAC sublayer 352.

As one embodiment, the higher layer in the present application refers to a layer above the physical layer.

## Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitter/receiver 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

In a transmission from the first communication device 410 to the second communication device 450, at the first communication device 410, an upper-layer data packet from a core network is provided to the controller/processor 475. The controller/processor 475 implements the functionality of the L2 layer. In a DL, the controller/processor 475 provides header compression, encryption, packet segmentation and reordering, multiplexing between logical and transport channels, and radio resource assignment to the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for the L1 layer (i.e., physical layer). The transmitting processor 416 implements encoding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, including codebook-based precoding and non-codebook-based precoding, and beamforming processing on coded and modulated symbols to generate one or more parallel streams. The transmitting processor 416 then maps each parallel stream to a subcarrier, multiplexes the modulated symbols with a reference signal (e.g., pilot) in a time domain and/or a frequency domain, and then uses an inverse fast Fourier transform (IFFT) to generate a physical channel carrying a time domain multi-carrier symbol stream. The multi-antenna transmitting processor 471 then performs transmitting analog precoding/beamforming operation on the time domain multi-carrier symbol stream. Each transmitter 418 converts a baseband multi-carrier symbol stream provided by the multi-antenna transmitting processor 471 into a radio frequency stream, and then provides it to different antennas 420.

In the transmission from the first communication device 410 to the second communication device 450, at the second communication device 450, each receiver 454 receives a signal through its corresponding antenna 452. Each receiver 454 recovers information modulated onto a radio frequency carrier, and converts a radio frequency stream into a baseband multi-carrier symbol stream and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiver 454. The receiving processor 456 uses a Fast Fourier Transform (FFT) to convert the baseband multi-carrier symbol stream subjected to the receiving analog precoding/beamforming operation from the time domain to the frequency domain.

In the frequency domain, the physical layer data signal and the reference signal are demultiplexed by the receiving processor 456, wherein the reference signal will be used for channel estimation, and the data signal undergoes multi-antenna detection in the multi-antenna receiving processor 458 to recover any parallel stream destined for the second communication device 450. The symbols on each parallel stream are demodulated and recovered in the receiving processor 456, and soft decisions are generated. The receiving processor 456 then decodes and deinterleaves the soft decisions to recover upper-layer data and control signals transmitted by the first communication device 410 on the physical channel. The upper-layer data and control signals are then provided to the controller/processor 459. The controller/processor 459 implements functions of the L2 layer. The controller/processor 459 may be associated with a memory 460 that stores a program code and data. The memory 460 may be referred to as a computer-readable medium. In the DL, the controller/processor 459 provides demultiplexing between transport and logical channels, packet reassembly, decryption, header decompression, and control signal processing to recover the upper-layer data packet from the core network. The upper-layer data packet is then provided to all protocol layers above the L2 layer. Various control signals may also be provided to L3 for L3 processing. The controller/processor 459 is also responsible for error detection using an acknowledgment (ACK) and/or negative acknowledgment (NACK) protocol to support HARQ operations.

In a transmission from the second communication device 450 to the first communication device 410, at the second communication device 450, the data source 467 is used to provide the upper-layer data packet to the controller/processor 459. The data source 467 represents all protocol layers above the L2 layer. Similar to the transmitting function at the first communication device 410 described in the DL, the controller/processor 459 implements header compression, encryption, packet segmentation and reordering, and multiplexing between logical and transport channels based on the radio resource assignment of the first communication device 410, and implements L2 layer functions for the user plane and the control plane. The controller/processor 459 is also responsible for HARQ operations, retransmission of lost packets, and signaling to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced parallel stream into a multi-carrier/single-carrier symbol stream, which is provided to different antennas 452 via the transmitter 454 after undergoing analog precoding/beamforming operations in the multi-antenna transmitting processor 457. Each transmitter 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, a function at the first communication device 410 is similar to a receiving function at the second communication device 450 described in the transmission from the first communication device 410 to the second communication device 450. Each receiver 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with a memory 476 that stores a program code and data. The memory 476 may be referred to as a computer-readable medium. The controller/processor 475 provides demultiplexing, packet reassembly, decryption, header decompression, and control signal processing between transport and logical channels to recover upper-layer data packets from the second communication device 450. The upper-layer data packets from the controller/processor 475 may be provided to the core network. The controller/processor 475 is also responsible for error detection using an ACK and/or NACK protocol to support HARQ operations.

As one embodiment, the second communication device 450 comprises: at least one processor and at least one memory, wherein the at least one memory comprises a computer program code; and the at least one memory and the computer program code are configured to be used together with the at least one processor. The second communication device 450 apparatus receives the first information block; receives the first signaling; and receives the first signal. The first information block is used for determining a first frequency domain resource and a second frequency domain resource, the first frequency domain resource and the second frequency domain resource respectively comprise at least one RB, the first frequency domain resource and the second frequency domain resource are orthogonal to each other, and the first frequency domain resource and the second frequency domain resource are discontinuous; the first signaling indicates scheduling information of the first signal; the first signal occupies a first RB group and a second RB group; the first RB group belongs to the first frequency domain resource, and the second RB group belongs to the second frequency domain resource; whether the same precoding is applied to the first RB group and the second RB group depends on whether the first condition is satisfied; when the first condition is satisfied, the same precoding is applied to the first RB group and the second RB group; and the first condition is related to both the first RB group and the second RB group.

As one embodiment, the second communication device 450 comprises: a memory storing a computer-readable instruction program, wherein the computer-readable instruction program generates actions when executed by at least one processor, and the actions comprise: receiving the first information block; receiving the first signaling; and receiving the first signal.

As one embodiment, the first communication device 410 comprises: at least one processor and at least one memory, the at least one memory comprising computer program code; the at least one memory and the computer program codes are configured to be used together with the at least one processor. The first communication device 410 apparatus at least transmits the first information block; transmits the first signaling; and transmits the first signal. The first information block is used for determining a first frequency domain resource and a second frequency domain resource, the first frequency domain resource and the second frequency domain resource respectively comprise at least one RB, the first frequency domain resource and the second frequency domain resource are orthogonal to each other, and the first frequency domain resource and the second frequency domain resource are discontinuous; the first signaling indicates scheduling information of the first signal; the first signal occupies a first RB group and a second RB group; the first RB group belongs to the first frequency domain resource, and the second RB group belongs to the second frequency domain resource; whether the same precoding is applied to the first RB group and the second RB group depends on whether the first condition is satisfied; when the first condition is satisfied, the same precoding is applied to the first RB group and the second RB group; and the first condition is related to both the first RB group and the second RB group.

As one embodiment, the first communication device 410 comprises: a memory storing a computer-readable instruction program, wherein the computer-readable instruction program generates actions when executed by at least one processor, and the actions comprise: transmitting the first information block; transmitting the first signaling; and transmitting the first signal.

As one embodiment, the first node in the present application comprises the second communication device 450.

As one embodiment, the second node in the present application comprises the first communication device 410.

As one embodiment, at least one of {the antenna 452, the receiver 454, the receiving processor 456, the multi-antenna receiving processor 458, the controller/processor 459, the memory 460, and the data source 467} is used for receiving the first information block; and at least one of {the antenna 420, the transmitter 418, the transmitting processor 416, the multi-antenna transmitting processor 471, the controller/processor 475, and the memory 476} is used for transmitting the first information block.

As one embodiment, at least one of {the antenna 452, the receiver 454, the receiving processor 456, the multi-antenna receiving processor 458, the controller/-processor 459, the memory 460, and the data source 467} is used for receiving the first signaling; at least one of {the antenna 420, the transmitter 418, the transmitting processor 416, the multi-antenna transmitting processor 471, the controller/processor 475, and the memory 476} is used for transmitting the first signal.

As one embodiment, at least one of {the antenna 452, the receiver 454, the receiving processor 456, the multi-antenna receiving processor 458, the controller/-processor 459, the memory 460, and the data source 467} is used for receiving the first signaling; and at least one of {the antenna 420, the transmitter 418, the transmitting processor 416, the multi-antenna transmitting processor 471, the controller/processor 475, and the memory 476} is used for transmitting the first signal.

As one embodiment, at least one of {the antenna 452, the receiver 454, the receiving processor 456, the multi-antenna receiving processor 458, the controller/-processor 459, the memory 460, and the data source 467} is used for receiving the second information block; and at least one of {the antenna 420, the transmitter 418, the transmitting processor 416, the multi-antenna transmitting processor 471, the controller/processor 475, and the memory 476} is used for transmitting the second information block.

## Embodiment 5

Embodiment 5 illustrates a flowchart of a transmission according to one embodiment of the present application, as shown in FIG. 5. In FIG. 5, a second node U1 and a first node U2 are communication nodes that transmit through an air interface. In FIG. 5, steps in a block F51 are optional.

For the second node U1, a first information block is transmitted in step S511; a second information block is transmitted in step S5101; first signaling is transmitted in step S512; and a first signal is transmitted in step S513.

For the first node U2, a first information block is received in step S521; a second information block is received in step S5201; first signaling is received in step S522; and a first signal is received in step S523.

In Embodiment 5, the first information block is used for determining a first frequency domain resource and a second frequency domain resource by the first node U2, the first frequency domain resource and the second frequency domain resource respectively comprise at least one RB, the first frequency domain resource and the second frequency domain resource are orthogonal to each other, and the first frequency domain resource and the second frequency domain resource are discontinuous; the first signaling indicates scheduling information of a first signal; the first signal occupies a first RB group and a second RB group, the first RB group belongs to the first frequency domain resource, and the second RB group belongs to the second frequency domain resource; whether the same precoding is applied to the first RB group and the second RB group depends on whether a first condition is satisfied; when the first condition is satisfied, the same precoding is applied to the first RB group and the second RB group; and the first condition is related to both the first RB group and the second RB group.

As one embodiment, the first node U2 is the first node in the present application.

As one embodiment, the second node U1 is the second node in the present application.

As one embodiment, an air interface between the second node U1 and the first node U2 comprises a wireless interface between a base station device and user equipment.

As one embodiment, an air interface between the second node U1 and the first node U2 comprises a wireless interface between a relay node device and user equipment.

As one embodiment, an air interface between the second node U1 and the first node U2 comprises a wireless interface between user equipment and user equipment.

As one embodiment, the second node U1 is a serving cell maintaining base station of the first node U2.

As one embodiment, the first information block is transmitted on a PDSCH (Physical Downlink Shared Channel).

As one embodiment, the first information block is transmitted on a PDCCH (Physical Downlink Control Channel).

As one embodiment, the first signaling is transmitted on a PDCCH.

As one embodiment, the first signaling is transmitted on a PDSCH.

As one embodiment, the first signal is transmitted on a PDSCH.

As one embodiment, steps in block F51 in FIG. 5 exist; the second information block is used for determining a first time domain resource by the first node U2; and the first signal overlaps with the first time domain resource in a time domain.

As one embodiment, the second information block is carried by higher layer signaling.

As one embodiment, the second information block is earlier than the first information block in the time domain.

As one embodiment, the second information block is later than the first information block in the time domain.

As one embodiment, the first time domain resource comprises at least one symbol.

As one embodiment, the first time domain resource comprises a symbol used for full duplex/SBFD.

As one embodiment, the second information block is transmitted on a PDSCH.

As one embodiment, the first condition comprises: the sum of the number of RBs included in the first RB group and the number of RBs included in the second RB group is greater than a first threshold.

As one embodiment, the first condition comprises: the sum of the number of RBs included in the first RB group and the number of RBs included in the second RB group is greater than or equal to a first threshold.

As one embodiment, whether the first condition is satisfied depends on the number of RBs included in the first RB group and the number of RBs included in the second RB group.

As one embodiment, when the sum of the number of RBs included in the first RB group and the number of RBs included in the second RB group is greater than the first threshold, the first condition is satisfied.

As one embodiment, when the sum of the number of RBs included in the first RB group and the number of RBs included in the second RB group is greater than or equal to the first threshold, the first condition is satisfied.

As one embodiment, when the sum of the number of RBs included in the first RB group and the number of RBs included in the second RB group is not greater than the first threshold, the first condition is not satisfied.

As one embodiment, when the sum of the number of RBs included in the first RB group and the number of RBs included in the second RB group is less than the first threshold, the first condition is not satisfied.

As one embodiment, the first condition being satisfied refers to: the sum of the number of RBs included in the first RB group and the number of RBs included in the second RB group is greater than the first threshold.

As one embodiment, the first condition being satisfied refers to: the sum of the number of RBs included in the first RB group and the number of RBs included in the second RB group is greater than or equal to the first threshold.

As one embodiment, the first threshold is a positive real number.

As one embodiment, the first threshold is configurable.

As one embodiment, the first condition comprises: the number of RBs spaced between the first RB group and the second RB group is less than a second threshold.

As one embodiment, the first condition comprises: the number of RBs spaced between the first RB group and the second RB group is less than or equal to a second threshold.

As one embodiment, whether the first condition is satisfied depends on the number of RBs spaced between the first RB group and the second RB group.

As one embodiment, when the number of RBs spaced between the first RB group and the second RB group is less than the second threshold, the first condition is satisfied.

As one embodiment, when the number of RBs spaced between the first RB group and the second RB group is less than or equal to the second threshold, the first condition is satisfied.

As one embodiment, when the number of RBs spaced between the first RB group and the second RB group is not less than the second threshold, the first condition is not satisfied.

As one embodiment, when the number of RBs spaced between the first RB group and the second RB group is greater than the second threshold, the first condition is not satisfied.

As one embodiment, the first condition being satisfied refers to: the number of RBs spaced between the first RB group and the second RB group is less than the second threshold.

As one embodiment, the first condition being satisfied refers to: the number of RBs spaced between the first RB group and the second RB group is less than or equal to the second threshold.

As one embodiment, the second threshold is a positive real number.

As one embodiment, the second threshold is configurable.

As one embodiment, the first condition comprises: the number of RBs included from a first RB to a second RB is greater than a third threshold, wherein the first RB is the lowest RB in the first RB group and the second RB group, and the second RB is the highest RB in the first RB group and the second RB group.

As one embodiment, the first condition comprises: the number of RBs included from a first RB to a second RB is greater than or equal to a third threshold, wherein the first RB is the lowest RB in the first RB group and the second RB group, and the second RB is the highest RB in the first RB group and the second RB group.

As one embodiment, whether the first condition is satisfied depends on the number of RBs included from a first RB to a second RB, the first RB is the lowest RB in the first RB group and the second RB group, and the second RB is the highest RB in the first RB group and the second RB group.

As one embodiment, when the number of RBs included from the first RB to the second RB is greater than the third threshold, the first condition is satisfied.

As one embodiment, when the number of RBs included from the first RB to the second RB is greater than or equal to the third threshold, the first condition is satisfied.

As one embodiment, when the number of RBs included from the first RB to the second RB is not greater than the third threshold, the first condition is not satisfied.

As one embodiment, when the number of RBs included from the first RB to the second RB is less than the third threshold, the first condition is not satisfied.

As one embodiment, the first condition being satisfied refers to: the number of RBs included from the first RB to the second RB is greater than the third threshold.

As one embodiment, the first condition being satisfied refers to: the number of RBs included from the first RB to the second RB is greater than or equal to the third threshold.

As one embodiment, the third threshold is a positive real number.

As one embodiment, the third threshold is configurable.

As one embodiment, the first condition comprises: the sum of the number of RBs included in the first RB group and the number of RBs included in the second RB group is greater than the first threshold, and the number of RBs spaced between the first RB group and the second RB group is less than the second threshold.

As one embodiment, the first condition comprises: the sum of the number of RBs included in the first RB group and the number of RBs included in the second RB group is greater than or equal to the first threshold, and the number of RBs spaced between the first RB group and the second RB group is less than the second threshold.

As one embodiment, the first condition comprises: the number of RBs included from the first RB to the second RB is greater than the third threshold, and the number of RBs spaced between the first RB group and the second RB group is less than the second threshold.

As one embodiment, the first condition comprises: the number of RBs included from the first RB to the second RB is greater than or equal to the third threshold, and the number of RBs spaced between the first RB group and the second RB group is less than the second threshold.

As one embodiment, the first condition comprises: the sum of the number of RBs included in the first RB group and the number of RBs included in the second RB group is greater than the first threshold, and the number of RBs included from the first RB to the second RB is greater than or equal to the third threshold.

As one embodiment, when the sum of the number of RBs included in the first RB group and the number of RBs included in the second RB group is greater than the first threshold, and the number of RBs spaced between the first RB group and the second RB group is less than the second threshold, the first condition is satisfied.

As one embodiment, when the number of RBs included from the first RB to the second RB is greater than the third threshold, and the number of RBs spaced between the first RB group and the second RB group is less than the second threshold, the first condition is satisfied.

As one embodiment, the first condition being satisfied comprises: the sum of the number of RBs included in the first RB group and the number of RBs included in the second RB group is greater than the first threshold.

As one embodiment, the first condition being satisfied comprises: the sum of the number of RBs included in the first RB group and the number of RBs included in the second RB group is greater than or equal to the first threshold.

As one embodiment, the first condition being satisfied comprises: the number of RBs spaced between the first RB group and the second RB group is less than the second threshold.

As one embodiment, the first condition being satisfied comprises: the number of RBs spaced between the first RB group and the second RB group is less than or equal to the second threshold.

As one embodiment, the first condition being satisfied comprises: the number of RBs included from the first RB to the second RB is greater than the third threshold.

As one embodiment, the first condition being satisfied comprises: the number of RBs included from the first RB to the second RB is greater than or equal to the third threshold.

As one embodiment, the first condition being satisfied refers to: the sum of the number of RBs included in the first RB group and the number of RBs included in the second RB group is greater than the first threshold, and the number of RBs spaced between the first RB group and the second RB group is less than the second threshold.

As one embodiment, the first condition being satisfied refers to: the sum of the number of RBs included in the first RB group and the number of RBs included in the second RB group is greater than or equal to the first threshold, and the number of RBs spaced between the first RB group and the second RB group is less than the second threshold.

As one embodiment, the first condition being satisfied refers to: the number of RBs included from the first RB to the second RB is greater than the third threshold, and the number of RBs spaced between the first RB group and the second RB group is less than the second threshold.

As one embodiment, the first condition being satisfied refers to: the number of RBs included from the first RB to the second RB is greater than or equal to the third threshold, and the number of RBs spaced between the first RB group and the second RB group is less than the second threshold.

As one embodiment, the first condition being not satisfied comprises: the sum of the number of RBs included in the first RB group and the number of RBs included in the second RB group is not greater than the first threshold.

As one embodiment, the first condition being not satisfied comprises: the number of RBs spaced between the first RB group and the second RB group is not less than the second threshold.

As one embodiment, the first condition being not satisfied comprises: the number of RBs included from the first RB to the second RB is not greater than the third threshold.

As one embodiment, the first condition being not satisfied comprises: the sum of the number of RBs included in the first RB group and the number of RBs included in the second RB group is less than the first threshold.

As one embodiment, the first condition being not satisfied comprises: the number of RBs spaced between the first RB group and the second RB group is greater than the second threshold.

As one embodiment, the first condition being not satisfied comprises: the number of RBs included from the first RB to the second RB is less than the third threshold.

As one embodiment, when the first condition is not satisfied, a precoding granularity of the first RB group depends on at least the former of the number of RBs included in the first frequency domain resource and the number of RBs included in the second frequency domain resource.

As one embodiment, the meaning of the sentence that when the first condition is not satisfied refers to: when different precoding is applied to the first RB group and the second RB group.

As one embodiment, when the first condition is not satisfied, a precoding granularity of the first RB group depends on the number of RBs included in the first frequency domain resource.

As one embodiment, when the first condition is not satisfied, a precoding granularity of the first RB group depends on only the number of RBs included in the first frequency domain resource of both the number of the RBs included in the first frequency domain resource and the number of RBs included in the second frequency domain resource.

As one embodiment, when the first condition is not satisfied, a precoding granularity of the first RB group depends on the number of RBs included in the first frequency domain resource and the number of RBs included in the second frequency domain resource.

As one embodiment, the precoding granularity of the first RB group refers to: a precoding granularity of a part of the first signal transmitted in the first RB group.

As one embodiment, the meaning of the precoding granularity of the first RB group comprises: whether the same precoding is applied to all RBs in the first RB group.

As one embodiment, the meaning of the precoding granularity of the first RB group comprises: the size of a PRG in the first RB group.

As one embodiment, candidates for the precoding granularity of the first RB group comprise a first parameter, 2 and 4.

As one sub-embodiment of the above embodiment, when the precoding granularity of the first RB group is the first value, the same precoding is applied to all RBs in the first RB group.

As one sub-embodiment of the above embodiment, the first parameter is one character string.

As one sub-embodiment of the above embodiment, the first parameter is 'wideband'.

As one sub-embodiment of the above embodiment, the first parameter is one integer.

As one embodiment, when the first condition is not satisfied, the precoding granularity of the second RB group depends on at least the latter of the number of RBs included in the first frequency domain resource and the number of RBs included in the second frequency domain resource.

As one embodiment, only when each condition in a second condition set is satisfied, whether the same precoding is applied to the first RB group and the second RB group depends on whether the first condition is satisfied; and the second condition set comprises at least one condition.

## Embodiment 6

Embodiment 6 illustrates a schematic diagram of a first frequency domain resource and a second frequency domain resource according to one embodiment of the present application, as shown in FIG. 6.

As one embodiment, the first frequency domain resource comprises a plurality of continuous RBs, and the second frequency domain resource comprises a plurality of continuous RBs.

As one embodiment, there exists at least one RB between the first frequency domain resource and the second frequency domain resource that belongs neither to the first frequency domain resource nor to the second frequency domain resource.

## Embodiment 7

Embodiment 7 illustrates a schematic diagram of a first frequency domain resource, a second frequency domain resource, and a first BWP according to one embodiment of the present application, as shown in FIG. 7. In Embodiment 7, the first frequency domain resource, the second frequency domain resource and the third frequency domain resource all belong to the first BWP; and the third frequency domain resource is orthogonal to the first frequency domain resource, and the third frequency domain resource is orthogonal to the second frequency domain resource.

The guard band in FIG. 7 is optional, and may not exist, that is, the bandwidth of the guard band may be 0.

As one embodiment, both the first frequency domain resource and the second frequency domain resource are configured to a downlink, and the third frequency domain resource is configured for an uplink.

As one embodiment, both the first frequency domain resource and the second frequency domain resource are used for a downlink, and the third frequency domain resource is used for an uplink.

As one embodiment, the first information block implicitly indicates the first frequency domain resource and the second frequency domain resource by indicating the third frequency domain resource.

As one embodiment, the first information block implicitly indicates the first frequency domain resource and the second frequency domain resource by indicating the third frequency domain resource and at least one guard band.

As one embodiment, the first frequency domain resource is lower than the third frequency domain resource in the frequency domain, and the second frequency domain resource is higher than the third frequency domain resource in the frequency domain.

As one embodiment, the first frequency domain resource is higher than the third frequency domain resource in the frequency domain, and the second frequency domain resource is lower than the third frequency domain resource in the frequency domain.

**Embodiment 8**

Embodiment 8 illustrates a schematic diagram of a first condition according to one embodiment of the present application, as shown in FIG. 8. In Embodiment 8, whether the same precoding is applied to the first RB group and the second RB group depends on whether a first condition is satisfied, and the first condition comprises: the sum of the number of RBs included in the first RB group and the number of RBs included in the second RB group is greater than a first threshold.

As one embodiment, the number of RBs included in the first RB group and the number of RBs included in the second RB group are respectively positive integers.

As one embodiment, the first threshold is a positive real number.

As one embodiment, the first threshold is a positive integer.

As one embodiment, the first threshold is a positive real number greater than 1.

As one embodiment, the first threshold is a positive integer greater than 1.

As one embodiment, the first threshold is configurable.

As one embodiment, the first threshold is configured by a base station.

As one embodiment, the first threshold is configured by RRC signaling.

As one embodiment, the first threshold is configured by a MAC CE.

As one embodiment, the first threshold is configured by DCI.

As one embodiment, the benefits of the above method comprise: more flexibly adjusting the precoding of the first signal.

As one embodiment, the first threshold does not need to be configured.

As one embodiment, the first threshold does not need to be configured by a base station.

As one embodiment, the first threshold depends on the number of RBs included in the first BWP.

As one embodiment, the first threshold depends on the subcarrier spacing of the first BWP.

As one embodiment, the first threshold is equal to the number of RBs included in the first BWP multiplied by a first coefficient and then rounded, and the first coefficient is a positive real number less than 1.

As one embodiment, the first threshold is equal to the number of RBs included in the first BWP multiplied by a first coefficient, and the first coefficient is a positive real number less than 1.

As one embodiment, the first threshold is equal to the number of RBs included in the first BWP divided by 2 and then rounded.

As one embodiment, the first threshold is equal to the number of RBs included in the first BWP divided by 2.

As one embodiment, the benefits of the above method comprises: saving signaling overhead.

As one embodiment, the benefits of the above method comprise: having good backward compatibility.

As one embodiment, the first threshold depends on the number of RBs included in the first frequency domain resource and the number of RBs included in the second frequency domain resource.

As one embodiment, the first threshold depends on the sum of the number of RBs included in the first frequency domain resource and the number of RBs included in the second frequency domain resource.

As one embodiment, the first threshold is equal to the sum of the number of RBs included in the first frequency domain resource and the number of RBs included in the second frequency domain resource multiplied by a first coefficient and then rounded, and the first coefficient is a positive real number less than 1.

As one embodiment, the first threshold is equal to the sum of the number of RBs included in the first frequency domain resource and the number of RBs included in the second frequency domain resource multiplied by a first coefficient, and the first coefficient is a positive real number less than 1.

As one embodiment, the first threshold is equal to the sum of the number of RBs included in the first frequency domain resource and the number of RBs included in the second frequency domain resource divided by 2 and then rounded.

As one embodiment, the first threshold is equal to the sum of the number of RBs included in the first frequency domain resource and the number of RBs included in the second frequency domain resource divided by 2.

As one embodiment, the benefits of the above method comprise: the precoding granularity of the first signal can be better matched with the size of a frequency domain resource for downlink transmission, thereby improving the transmission performance.

As one embodiment, the benefits of the above method comprises: saving signaling overhead.

As one embodiment, the first coefficient is configurable.

As one embodiment, the first coefficient is configured by higher layer signaling.

As one embodiment, the first coefficient is fixed.

As one embodiment, the first coefficient is 0.5.

## Embodiment 9

Embodiment 9 illustrates a schematic diagram of a first condition according to one embodiment of the present application, as shown in FIG. 9. In Embodiment 9, whether the same precoding is applied to the first RB group and the second RB group depends on whether a first condition is satisfied, and the first condition comprises: the number of RBs spaced between the first RB group and the second RB group is less than a second threshold.

As one embodiment, any RB in the first RB group is lower than any RB in the second RB group in the frequency domain, the serial number of the highest RB in the first RB group is n1, and the serial number of the lowest RB in the second RB group is n2.

As one sub-embodiment of the above embodiment, the number of RBs spaced between the first RB group and the second RB group is equal to n2 minus n1 minus 1.

As one sub-embodiment of the above embodiment, the number of RBs spaced between the first RB group and the second RB group is equal to n2 minus n1 plus 1.

As one sub-embodiment of the above embodiment, the number of RBs spaced between the first RB group and the second RB group is equal to n2 minus n1.

As one sub-embodiment of the above embodiment, n1 is a CRB serial number, and n2 is a CRB serial number.

As one sub-embodiment of the above embodiment, n1 is a PRB serial number, and n2 is a PRB serial number.

As one sub-embodiment of the above embodiment, n1 is a VRB serial number, and n2 is a VRB serial number.

As one sub-embodiment of the above embodiment, the highest RB is CRB n1, and the lowest RB is CRB n2.

As one sub-embodiment of the above embodiment, the highest RB is PRB n1, and the lowest RB is PRB n2.

As one sub-embodiment of the above embodiment, the highest RB is VRB n1, and the lowest RB is VRB n2.

As one embodiment, any RB in the first RB group is higher than any RB in the second RB group in the frequency domain, the serial number of the lowest RB in the first RB group is n3, and the serial number of the highest RB in the second RB group is n4.

As one sub-embodiment of the above embodiment, the number of RBs spaced between the first RB group and the second RB group is equal to the n3 minus the n4 minus 1.

As one sub-embodiment of the above embodiment, the number of RBs spaced between the first RB group and the second RB group is equal to the n3 minus the n4 plus 1.

As one sub-embodiment of the above embodiment, the number of RBs spaced between the first RB group and the second RB group is equal to the n3 minus the n4.

As one sub-embodiment of the above embodiment, the n3 is a CRB serial number, and the n4 is a CRB serial number.

As one sub-embodiment of the above embodiment, the n3 is a PRB serial number, and the n4 is a PRB serial number.

As one sub-embodiment of the above embodiment, the n3 is a VRB serial number, and the n4 is a VRB serial number.

As one sub-embodiment of the above embodiment, the lowest RB is a CRB n3, and the highest RB is a CRB n4.

As one sub-embodiment of the above embodiment, the lowest RB is a PRB n3, and the highest RB is a PRB n4.

As one sub-embodiment of the above embodiment, the lowest RB is a VRB n3, and the highest RB is a VRB n4.

As one embodiment, any RB in the first RB group is lower than any RB in the second RB group in the frequency domain.

As one sub-embodiment of the above embodiment, the number of RBs spaced between the first RB group and the second RB group refers to: the number of RBs that are higher than the highest RB in the first RB group and lower than the lowest RB in the second RB group in the frequency domain.

As one sub-embodiment of the above embodiment, the number of RBs spaced between the first RB group and the second RB group refers to: the number of RBs that are higher than the highest RB in the first RB group and lower than the lowest RB in the second RB group in the frequency domain plus 1.

As one sub-embodiment of the above embodiment, the number of RBs spaced between the first RB group and the second RB group refers to: the number of RBs that are higher than the highest RB in the first RB group and lower than the lowest RB in the second RB group in the frequency domain minus 1.

As one embodiment, any RB in the first RB group is higher than any RB in the second RB group in the frequency domain.

As one sub-embodiment of the above embodiment, the number of RBs spaced between the first RB group and the second RB group refers to: the number of RBs that are lower than the lowest RB in the first RB group and higher than the highest RB in the second RB group in the frequency domain.

As one sub-embodiment of the above embodiment, the number of RBs spaced between the first RB group and the second RB group refers to: the number of RBs that are lower than the lowest RB in the first RB group and higher than the highest RB in the second RB group in the frequency domain plus 1.

As one sub-embodiment of the above embodiment, the number of RBs spaced between the first RB group and the second RB group refers to: the number of RBs that are lower than the lowest RB in the first RB group and higher than the highest RB in the second RB group in the frequency domain minus 1.

As one embodiment, one RB being higher/lower than another RB in the frequency domain refers to: the serial number of the one RB is greater than/less than the serial number of the another RB.

As one embodiment, one RB being higher/lower than another RB in the frequency domain refers to: the CRB serial number of the one RB is greater than/less than the CRB serial number of the another RB.

As one embodiment, one RB being higher/lower than another RB in the frequency domain refers to: the PRB serial number of the one RB is greater than/less than the PRB serial number of the another RB.

As one embodiment, one RB being higher/lower than another RB in the frequency domain refers to: a frequency of a frequency domain resource occupied by the one RB is higher/lower than a frequency of a frequency domain resource occupied by the another RB.

As one embodiment, the second threshold is a positive real number.

As one embodiment, the second threshold is a positive integer.

As one embodiment, the second threshold is a positive real number greater than 1.

As one embodiment, the second threshold is a positive integer greater than 1.

As one embodiment, the second threshold is configurable.

As one embodiment, the second threshold is configured by a base station.

As one embodiment, the second threshold is configured by RRC signaling.

As one embodiment, the second threshold is configured by a MAC CE.

As one embodiment, the second threshold is configured by DCI.

As one embodiment, the benefits of the above method comprise: more flexibly adjusting the precoding of the first signal.

As one embodiment, the second threshold does not need to be configured.

As one embodiment, the second threshold does not need to be configured by a base station.

As one embodiment, the second threshold is related to a subcarrier spacing.

As one embodiment, the second threshold is related to the subcarrier spacing of the first signal.

As one embodiment, the second threshold depends on the number of RBs included in the third frequency domain resource.

As one embodiment, the second threshold is equal to the number of RBs included in the third frequency domain resource multiplied by a second coefficient.

As one embodiment, the second threshold is equal to the number of RBs included in the third frequency domain resource multiplied by a second coefficient and then rounded.

As one embodiment, the second threshold depends on the number of RBs included in the first BWP.

As one embodiment, the second threshold is equal to the number of RBs included in the first BWP multiplied by a second coefficient.

As one embodiment, the second threshold is equal to the number of RBs included in the first BWP multiplied by a second coefficient and then rounded.

As one embodiment, the benefits of the above method comprise: saving signaling overhead.

As one embodiment, the second coefficient is a positive real number less than 1.

As one embodiment, the second coefficient is configurable.

As one embodiment, the second coefficient is configured by RRC signaling.

As one embodiment, the second coefficient is fixed.

## Embodiment 10

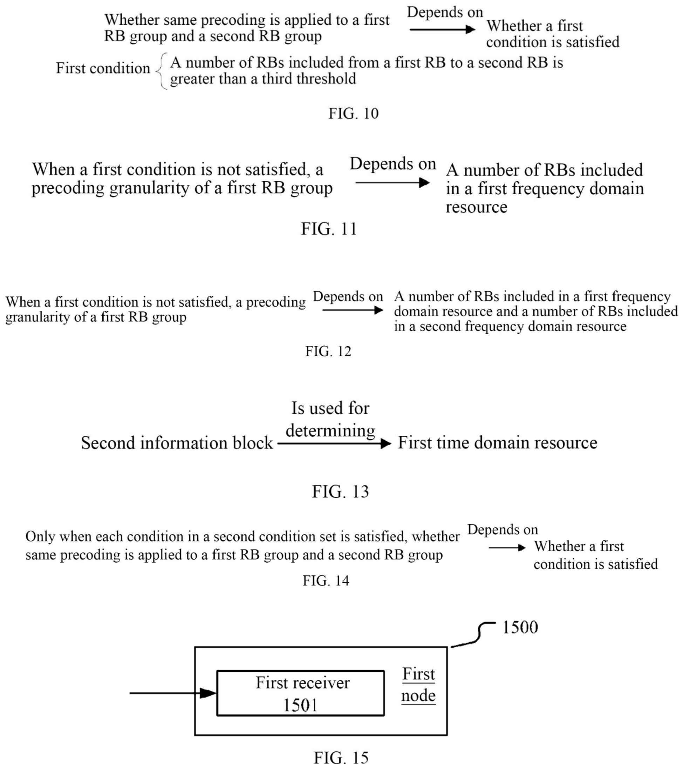

Embodiment 10 illustrates a schematic diagram of a first condition according to one embodiment of the present application, as shown in FIG. 10. In Embodiment 10, whether the same precoding is applied to the first RB group and the second RB group depends on whether a first condition is satisfied, the first condition comprises: the number of RBs included from a first RB to a second RB is greater than a third threshold, wherein the first RB is the lowest RB in the first RB group and the second RB group, and the second RB is the highest RB in the first RB group and the second RB group.

As one embodiment, the first RB is one VRB, and the second RB is one VRB.

As one embodiment, the first RB is one PRB, and the second RB is one PRB.

As one embodiment, the first RB is one CRB, and the second RB is one CRB.

As one embodiment, the lowest RB refers to: a RB with the smallest serial number.

As one embodiment, the lowest RB refers to: a RB with the smallest CRB serial number.

As one embodiment, the lowest RB refers to: a RB with the smallest PRB serial number.

As one embodiment, the lowest RB refers to: a RB with the smallest VRB serial number.

As one embodiment, the lowest RB refers to: a RB occupying the lowest frequency domain resource.

As one embodiment, the highest RB refers to: a RB with the largest serial number.

As one embodiment, the highest RB refers to: a RB with the largest CRB serial number.

As one embodiment, the highest RB refers to: a RB with the largest PRB serial number.

As one embodiment, the highest RB refers to: a RB with the largest VRB serial number.

As one embodiment, the highest RB refers to: a RB occupying the highest frequency domain resource.

As one embodiment, any RB in the first RB group is not lower than the first RB in the frequency domain, and any RB in the second RB group is not lower than the first RB in the frequency domain.

As one embodiment, any RB in the first RB group is not higher than the second RB in the frequency domain, and any RB in the second RB group is not higher than the second RB in the frequency domain.

As one embodiment, the serial number of the first RB is m1, and the serial number of the second RB is m2; and the number of RBs included from the first RB to the second RB is equal to the m2 minus the m1.

As one embodiment, the serial number of the first RB is m1, and the serial number of the second RB is m2; and the number of RBs included from the first RB to the second RB is equal to the m2 minus the m1 plus 1.

As one embodiment, the serial number of the first RB is m1, and the serial number of the second RB is m2; and the number of RBs included from the first RB to the second RB is equal to the m2 minus the m1 minus 1.

As one embodiment, the m1 is a CRB serial number, and the m2 is a CRB serial number.

As one embodiment, the m1 is a PRB serial number, and the m2 is a PRB serial number.

As one embodiment, the m1 is a VRB serial number, and the m2 is a VRB serial number.

As one embodiment, the first RB is a CRB m1, and the second RB is a CRB m2.

As one embodiment, the first RB is a PRB m1, and the second RB is a PRB m2.

As one embodiment, the first RB is a VRB m1, and the second RB is a VRB m2.

As one embodiment, the third threshold is a positive real number.

As one embodiment, the third threshold is a positive integer.

As one embodiment, the third threshold is a positive real number greater than 1.

As one embodiment, the third threshold is a positive integer greater than 1.

As one embodiment, the third threshold is configurable.

As one embodiment, the third threshold is configured by a base station.

As one embodiment, the third threshold is configured by RRC signaling.

As one embodiment, the third threshold is configured by a MAC CE.

As one embodiment, the third threshold is configured by DCI.

As one embodiment, the benefits of the above method comprise: more flexibly adjusting the precoding granularity of the first signal.

As one embodiment, the third threshold does not need to be configured.

As one embodiment, the third threshold does not need to be configured by a base station.

As one embodiment, the third threshold is related to a subcarrier spacing.

As one embodiment, the third threshold is related to the subcarrier spacing of the first signal.

As one embodiment, the third threshold depends on the number of RBs included in the first frequency domain resource and the number of RBs included in the second frequency domain resource.

As one embodiment, the third threshold is equal to the sum of the number of RBs included in the first frequency domain resource and the number of RBs included in the second frequency domain resource multiplied by a third coefficient.

As one embodiment, the third threshold is equal to the sum of the number of RBs included in the first frequency domain resource and the number of RBs included in the second frequency domain resource multiplied by a third coefficient and then rounded.

As one embodiment, the third threshold depends on the number of RBs included in the first BWP.

As one embodiment, the third threshold is equal to the number of RBs included in the first BWP multiplied by a third coefficient.

As one embodiment, the third threshold is equal to the number of RBs included in the first BWP multiplied by a third coefficient and then rounded.

As one embodiment, the benefits of the above method comprise: saving signaling overhead.

As one embodiment, the third coefficient is a positive real number less than 1.

As one embodiment, the third coefficient is configurable.

As one embodiment, the third coefficient is configured by RRC signaling.

As one embodiment, the third coefficient is fixed.

As one embodiment, the third coefficient is equal to 0.5.

## Embodiment 11

Embodiment 11 illustrates a schematic diagram of a precoding granularity of a first RB group when a first condition is not satisfied according to one embodiment of the present application, as shown in FIG. 11. In Embodiment 11, when the first condition is not satisfied, the precoding granularity of the first RB group depends on the number of RBs included in the first frequency domain resource.

As one embodiment, when the first condition is not satisfied, the precoding granularity of the first RB group depends on the number of RBs included in the first RB group and the number of RBs included in the first frequency domain resource.

As one embodiment, the benefits of the above method comprise: making the precoding granularity of the first signal in the first RB group more matched with the size of resources assigned to the first signal in the first frequency domain resource, thereby improving the system performance.

As one embodiment, the benefits of the above method comprise: more flexibly determining the precoding granularity of part of the first signal in the first frequency domain resource and the second frequency domain resource, thereby improving the transmission performance.

As one embodiment, when the first condition is not satisfied, the precoding granularity of the first RB group depends on a fourth threshold, and the fourth threshold depends on the number of RBs included in the first frequency domain resource.

As one embodiment, when the first condition is not satisfied, and the number of RBs included in the first RB group is greater than the fourth threshold, the same precoding is applied to all RBs in the first RB group.

As one embodiment, when the first condition is not satisfied, and the number of RBs included in the first RB group is greater than or equal to the fourth threshold, the same precoding is applied to all RBs in the first RB group.

As one embodiment, when the first condition is not satisfied, and the number of RBs included in the first RB group is not greater than the fourth threshold, a first precoding granularity is applied to the first RB group; and the first precoding granularity is equal to 2 or 4.

As one embodiment, when the first condition is not satisfied, and the number of RBs included in the first RB group is less than the fourth threshold, a first precoding granularity is applied to the first RB group; and the first precoding granularity is equal to 2 or 4.

As one embodiment, the fourth threshold is equal to the number of RBs included in the first frequency domain resource divided by 2.

As one embodiment, the fourth threshold is equal to the number of RBs included in the first frequency domain resource divided by 2 and then rounded.

As one embodiment, the fourth threshold is equal to the number of RBs included in the first frequency domain resource multiplied by a fourth coefficient.

As one embodiment, the fourth threshold is equal to the number of RBs included in the first frequency domain resource multiplied by a fourth coefficient and then rounded.

As one embodiment, when the first condition is not satisfied, a precoding granularity of the second RB group depends on the number of RBs included in the second frequency domain resource.

As one embodiment, when the first condition is not satisfied, a precoding granularity of the second RB group depends on the number of RBs included in the second RB group and the number of RBs included in the second frequency domain resource.

As one embodiment, when the first condition is not satisfied, a precoding granularity of the second RB group depends on a fifth threshold, and the fifth threshold depends on the number of RBs included in the second frequency domain resource.

As one embodiment, when the first condition is not satisfied, and the number of RBs included in the second RB group is greater than the fifth threshold, the same precoding is applied to all RBs in the second RB group.

As one embodiment, when the first condition is not satisfied, and the number of RBs included in the second RB group is greater than or equal to the fifth threshold, the same precoding is applied to all RBs in the second RB group.

As one embodiment, when the first condition is not satisfied, and the number of RBs included in the second RB group is not greater than the fifth threshold, a first precoding granularity is applied to the second RB group; and the first precoding granularity is equal to 2 or 4.

As one embodiment, when the first condition is not satisfied, and the number of RBs included in the second RB group is less than the fifth threshold, a first precoding granularity is applied to the second RB group; and the first precoding granularity is equal to 2 or 4.

As one embodiment, the fifth threshold is equal to the number of RBs included in the second frequency domain resource divided by 2.

As one embodiment, the fifth threshold is equal to the number of RBs included in the second frequency domain resource divided by 2 and then rounded.

As one embodiment, the fifth threshold is equal to the number of RBs included in the second frequency domain resource multiplied by a fourth coefficient.

As one embodiment, the fifth threshold is equal to the number of RBs included in the second frequency domain resource multiplied by a fourth coefficient and then rounded.

As one embodiment, the fourth coefficient is a positive real number less than 1.

As one embodiment, the fourth coefficient is configurable.

As one embodiment, the fourth coefficient is configured by RRC signaling.

As one embodiment, the fourth coefficient is fixed.

As one embodiment, the fourth coefficient is equal to 0.5.

As one embodiment, different precoding granularities are applied to the first RB group and the second RB group.

As one embodiment, a precoding granularity of the first RB group and a precoding granularity of the second RB group are respectively determined.

As one embodiment, the first precoding granularity is $P'_{BWP,i}$.

As one embodiment, the definition of the $P'_{BWP,i}$ refers to 3GPP TS38.214.

As one embodiment, the first precoding granularity is a bundle size.

As one embodiment, the first precoding granularity is configured by higher-layer parameters.

As one embodiment, the first precoding granularity is configured by a higher-layer parameter bundle-SizeSet1.

As one embodiment, the first precoding granularity is a value different from 'wideband' in a first bundle size set.

As one embodiment, the first bundle size set is a bundle size set configured by a higher-layer parameter bundleSizeSet1.

As one embodiment, the meaning that the first precoding granularity is applied to the first RB group/the second RB group comprises: a PRG (Precoding Resource Block Group) size of the first RB group/the second RB group depends on the first precoding granularity.

As one embodiment, the meaning that the first precoding granularity is applied to the first RB group/the second RB group comprises: the first precoding granularity is used for determining the size of a PRG of the first RB group/the second RB group.

As one embodiment, the size of a PRG refers to: the number of RBs included in one PRG.

As one embodiment, the size of a PRG refers to: the number of continuous PRBs included in one PRG.

As one embodiment, when the first precoding granularity is applied to the first RB group or the second RB group, the size of each PRGs in the first RB group or the second RB group other than the first PRG and the last one PRG is the first precoding granularity.

As one embodiment, the size of the first PRG is equal to (the first precoding granularity - (Ns mod the first precoding granularity)) continuous PRBs, and the size of the last one PRG is equal to ((Ns + Nw) mod the first precoding granularity) or the first precoding granularity.

As one embodiment, the Ns identifies a starting RB of the first BWP, and the Nw is the number of RBs included in the first BWP.

As one embodiment, the Ns identifies a starting RB of the first frequency domain resource or the second frequency domain resource, and the Nw is the number of RBs included in the first frequency domain resource or the second frequency domain resource.

As one embodiment, the first PRG refers to: the first PRG in the first BWP.

As one embodiment, the last one PRG refers to: the last one PRG in the first BWP.

As one embodiment, the first PRG refers to: the first PRG in the first frequency domain resource or the second frequency domain resource.

As one embodiment, the last one PRG refers to: the last one PRG in the first frequency domain resource or the second frequency domain resource.

As one embodiment, the same precoding is applied to continuous PRBs within one PRG.

As one embodiment, the same precoding is applied to continuous downlink PRBs within one PRG.

As one embodiment, the first node assumes that the same precoding is applied to continuous PRBs within one PRG.

As one embodiment, the first node assumes that the same precoding is applied to continuous downlink PRBs within one PRG.

As one embodiment, the first node may assume that the same precoding is applied to continuous PRBs within one PRG.

As one embodiment, the first node may assume that the same precoding is applied to continuous downlink PRBs within one PRG.

**Embodiment 12**

Embodiment 12 illustrates a schematic diagram of a precoding granularity of a first RB group when a first condition is not satisfied according to one embodiment of the present application, as shown in FIG. 12. In Embodiment 12, when the first condition is not satisfied, a precoding granularity of the first RB group depends on the number of RBs included in the first frequency domain resource and the number of RBs included in the second frequency domain resource.

As one embodiment, when the first condition is not satisfied, a precoding granularity of the first RB group depends on the number of RBs included in the first RB group, the number of RBs included in the first frequency domain resource, the number of RBs included in the second RB group, and the number of RBs included in the second frequency domain resource.

As one embodiment, the benefits of the above method comprise: ensuring that the first signal uses the same precoding granularity in the first frequency domain resource and the second frequency domain resource, thereby simplifying the complexity of the UE.

As one embodiment, when the first condition is not satisfied, a precoding granularity of the first RB group depends on a sixth threshold and a seventh threshold, the sixth threshold depends on the number of RBs included in the first frequency domain resource, and the seventh threshold depends on the number of RBs included in the second frequency domain resource.

As one embodiment, when the first condition is not satisfied, the number of RBs included in the first RB group is greater than the sixth threshold, and the number of RBs included in the second RB group is greater than the seventh threshold, the same precoding is applied to all RBs in the first RB group.

As one embodiment, when the first condition is not satisfied, the number of RBs included in the first RB group is greater than or equal to the sixth threshold, and the number of RBs included in the second RB group is greater than or equal to the seventh threshold, the same precoding is applied to all RBs in the first RB group.

As one embodiment, when the first condition is not satisfied, if the number of RBs included in the first RB group is not greater than the sixth threshold or the number of RBs included in the second RB group is not greater than the seventh threshold, a first precoding granularity is applied to the first RB group; and the first precoding granularity is equal to 2 or 4.

As one embodiment, when the first condition is not satisfied, if the number of RBs included in the first RB group is less than the sixth threshold or the number of RBs included in the second RB group is less than the seventh threshold, a first precoding granularity is applied to the first RB group; the first precoding granularity is equal to 2 or 4.

As one embodiment, the sixth threshold is equal to the number of RBs included in the first frequency domain resource divided by 2, and the seventh threshold is equal to the number of RBs included in the second frequency domain resource divided by 2.

As one embodiment, the sixth threshold is equal to the number of RBs included in the first frequency domain resource multiplied by a fifth coefficient, and the seventh threshold is equal to the number of RBs included in the second frequency domain resource multiplied by the fifth coefficient.

As one embodiment, the fifth coefficient is a positive real number less than 1.

As one embodiment, the fifth coefficient is configurable.

As one embodiment, the fifth coefficient is fixed.

As one embodiment, the fifth coefficient is equal to 0.5.

As one embodiment, when the first condition is not satisfied, a precoding granularity of the second RB group depends on the number of RBs included in the first frequency domain resource and the number of RBs included in the second frequency domain resource.

As one embodiment, when the first condition is not satisfied, a precoding granularity of the second RB group depends on the number of RBs included in the first RB group, the number of RBs included in the first frequency domain resource, the number of RBs included in the second RB group, and the number of RBs included in the second frequency domain resource.

As one embodiment, when the first condition is not satisfied, the number of RBs included in the first RB group is greater than the sixth threshold, and the number of RBs included in the second RB group is greater than the seventh threshold, the same precoding is applied to all RBs in the second RB group.

As one embodiment, when the first condition is not satisfied, the number of RBs included in the first RB group is greater than or equal to the sixth threshold, and the number of RBs included in the second RB group is greater than or equal to the seventh threshold, the same precoding is applied to all RBs in the second RB group.

As one embodiment, when the first condition is not satisfied, if the number of RBs included in the first RB group is not greater than the sixth threshold or the number of RBs included in the second RB group is not greater than the seventh threshold, a first precoding granularity is applied to the second RB group; and the first precoding granularity is equal to 2 or 4.

As one embodiment, when the first condition is not satisfied, if the number of RBs included in the first RB group is less than the sixth threshold or the number of RBs included in the second RB group is less than the seventh threshold, a first precoding granularity is applied to the second RB group; and the first precoding granularity is equal to 2 or 4.

As one embodiment, the same precoding granularity is applied to the first RB group and the second RB group.

As one embodiment, the first node determines one precoding granularity, and the one precoding granularity is simultaneously applied to the first RB group and the second RB group.

## Embodiment 13

Embodiment 13 illustrates a schematic diagram of a second information block according to one embodiment of the present application, as shown in FIG. 13. In Embodiment 13, the second information block is used for determining the first time domain resource.

As one embodiment, the second information block is carried by higher layer signaling.

As one embodiment, the second information block is carried by RRC signaling.

As one embodiment, the second information block comprises information in all or part of fields in one RRC IE.

As one embodiment, the second information block comprises information in all or part of fields in each of a plurality of RRC IEs.

As one embodiment, the second information block comprises information in all or part of fields in a TDD-UL-DL-ConfigCommon IE.

As one embodiment, the second information block comprises information in all or part of fields in a TDD-UL-DL-ConfigDedicated IE.

As one embodiment, the second information block comprises information in all or part of fields in a ServingCellConfig IE.

As one embodiment, the second information block comprises information in all or part of fields in a ServingCellConfigCommonSIB IE.

As one embodiment, the second information block comprises information in all or part of fields in a ServingCellConfigCommon IE.

As one embodiment, the second information block is carried by at least one RRC IE.

As one embodiment, the second information block is carried by a TDD-UL-DL-ConfigCommon IE.

As one embodiment, the second information block is carried by a TDD-UL-DL-ConfigDedicated IE.

As one embodiment, the second information block is carried by a ServingCellConfig IE, a ServingCell-ConfigCommonSIB IE, or a ServingCellConfigCommon IE.

As one embodiment, the second information block is carried by a MAC CE.

As one embodiment, the second information block comprises a MAC CE.

As one embodiment, the second information block is carried by DCI.

As one embodiment, the second information block comprises DCI.

As one embodiment, the second information block comprises information in one or more fields in one DCI.

As one embodiment, the second information block comprises a DCI format 2_0.

As one embodiment, the second information block is carried by RRC signaling and MAC CE.

As one embodiment, the second information block is carried jointly by higher layer signaling and DCI.

As one embodiment, the second information block and the first information block are carried by the same IE.

As one embodiment, the second information block and the first information block are carried by different domains of the same IE.

As one embodiment, the second information block and the first information block are carried by the same domain of the same IE.

As one embodiment, the second information block and the first information block are carried by different IEs.

As one embodiment, the second information block and the first information block are respectively carried by RRC signaling and MAC CE.

As one embodiment, the second information block and the first information block are respectively carried by DCI and higher layer signaling.

As one embodiment, the first time domain resource comprises one or more symbols.

As one embodiment, at least one symbol in the first time domain resource is configured for both an uplink and a downlink.

As one embodiment, each symbol in the first time domain resource is configured for both an uplink and a downlink.

As one embodiment, at least one symbol in the first time domain resource is used for both an uplink and a downlink.

As one embodiment, each symbol in the first time domain resource is used for both an uplink and a downlink.

As one embodiment, at least one symbol in the first time domain resource is configured for an uplink in part of RBs, and configured for a downlink in another part of the RBs.

As one embodiment, at least one symbol in the first time domain resource is used for an uplink in part of RBs, and used for a downlink in another part of the RBs.

As one embodiment, each symbol in the first time domain resource is configured for an uplink in part of RBs, and configured for a downlink in another part of the RBs.

As one embodiment, each symbol in the first time domain resource is used for an uplink in part of RBs, and used for a downlink in another part of the RBs.

As one embodiment, at least one symbol in the first time domain resource is configured for an uplink in part of RBs in a first cell, and configured for a downlink in another part of the RBs in the first cell.

As one embodiment, at least one symbol in the first time domain resource is used for an uplink in part of RBs in a first cell, and used for a downlink in another part of the RBs in the first cell.

As one embodiment, each symbol in the first time domain resource is configured for an uplink in part of RBs in a first cell, and configured for a downlink in another part of the RBs in the first cell.

As one embodiment, each symbol in the first time domain resource is used for an uplink in part of RBs in a first cell, and used for a downlink in another part of the RBs in the first cell.

As one embodiment, the first cell is a cell where the first signal is located.

As one embodiment, at least one symbol in the first time domain resource is configured by a third information block as a DL (DownLink), and is configured for an uplink in a third frequency domain resource.

As one embodiment, each symbol in the first time domain resource is configured by a third information block as DL or Flexible, and is configured for uplink in a third frequency domain resource.

As one embodiment, at least one symbol in the first time domain resource is configured by a third information block as a DL, and is used for an uplink in a third frequency domain resource.

As one embodiment, each symbol in the first time domain resource is configured by a third information block as a DL or Flexible, and is used for an uplink in a third frequency domain resource.

As one embodiment, at least one symbol in the first time domain resource is configured by a third information block as DL or Flexible, and is only used for downlink in the first frequency domain resource and the second frequency domain resource.

As one embodiment, each symbol in the first time domain resource is configured by a third information block as DL or Flexible, and is only used for downlink in the first frequency domain resource and the second frequency domain resource.

As one embodiment, at least one symbol in the first time domain resource is configured by a third information block as DL or Flexible, and is used for downlink only in the first frequency domain resource and the second frequency domain resource in the first BWP.

As one embodiment, each symbol in the first time domain resource is configured by a third information block as DL or Flexible, and is used for downlink only in the first frequency domain resource and the second frequency domain resource in the first BWP.

As one embodiment, the third information block is carried by an RRC IE.

As one embodiment, the name of an RRC IE carrying the third information block comprises 'TDD-UL-DL-Config'.

As one embodiment, the third information block is carried by a TDD-UL-DL-ConfigCommon IE.

As one embodiment, the third information block is a TDD-UL-DL-ConfigCommon IE.

As one embodiment, the first time domain resource comprises symbols used for full duplex/SBFD.

As one embodiment, each symbol in the first time domain resource is used for full duplex/SBFD.

As one embodiment, the problem to be solved by the present application comprises: when the first signal occupies symbols used for full duplex/SBFD, how to determine the precoding of the first signal.

As one embodiment, the problem to be solved by the present application comprises: when the first signal occupies symbols used for full duplex/SBFD and is assigned resources in two discontinuous subbands for downlink, how to determine whether the same precoding is applied to parts of the first signal in these two subbands for downlink. In the above method, whether the same precoding is used depends on the first condition related to the RBs assigned in these two subbands used for downlink, which solves this problem.

As one embodiment, the second information block indicates the first time domain resource.

As one embodiment, the second information block explicitly indicates the first time domain resource.

As one embodiment, the second information block implicitly indicates the first time domain resource.

As one embodiment, the second information block indicates which symbols belong to the first time domain resource.

As one embodiment, the second information block configures symbols in the first time domain resource as a first type.

As one embodiment, the first type is different from an uplink and a downlink.

As one embodiment, the first type is different from an uplink, a downlink and Flexible.

As one embodiment, the first type is different from sidelink.

As one embodiment, the second information block indicates the first time domain resource by configuring symbols in the first time domain resource as the first type.

As one embodiment, the second information block indicates the first time domain resource by configuring frequency domain resources for an uplink for symbols configured as a DL or Flexible by the third information block.

As one embodiment, the second information block configures symbols in the first time domain resource for an uplink in the third frequency domain resource.

As one embodiment, the first signal belongs to the first time domain resource in the time domain.

As one embodiment, at least one symbol occupied by the first signal belongs to the first time domain resource.

As one embodiment, at least one symbol occupied by the first signal does not belong to the first time domain resource.

As one embodiment, each symbol occupied by the first signal belongs to the first time domain resource.

**Embodiment 14**

Embodiment 14 illustrates a schematic diagram of a second condition set according to one embodiment of the present application, as shown in FIG. 14. In Embodiment 14, only when each condition in the second condition set is satisfied, whether the same precoding is applied to the first RB group and the second RB group depends on whether the first condition is satisfied; and the second condition set comprises at least one condition.

As one embodiment, the second condition set is used for determining whether a precoding granularity of the first signal depends on the first condition, and the precoding granularity of the first signal refers to: whether the same precoding is applied to the first RB group and the second RB group.

As one embodiment, whether a precoding granularity of the first signal depends on the first condition depends on whether the second condition set is satisfied, and the precoding granularity of the first signal refers to: whether the same precoding is applied to the first RB group and the second RB group.

As one embodiment, when at least one condition in the second condition set is not satisfied, whether the same precoding is applied to the first RB group and the second RB group does not depend on whether the first condition is satisfied.

As one embodiment, when at least one condition in the second condition set is not satisfied, different precoding is applied to the first RB group and the second RB group.

As one embodiment, the second condition set comprises a second condition, and the second condition comprises: whether the first node is configured with a first higher-layer parameter.

As one embodiment, the second condition set comprises a second condition, and the second condition comprises: whether the first node is configured with a first higher-layer parameter set to a second parameter.

As one embodiment, the first higher-layer parameter indicates: whether the same precoding being applied to discontinuous RBs is supported.

As one embodiment, the first higher-layer parameter set to the second parameter indicates: the same precoding being applied to discontinuous RBs is supported.

As one embodiment, the second parameter is 'enabled'.

As one embodiment, when the first node is configured with the first higher-layer parameter, the second condition is satisfied.

As one embodiment, when the first node is configured with the first higher-layer parameter set to the second parameter, the second condition is satisfied.

As one embodiment, when the first node is not configured with the first higher-layer parameter, the second condition is not satisfied.

As one embodiment, when the first node is not configured with the first higher-layer parameter set to the second parameter, the second condition is not satisfied.

As one embodiment, when the second condition is satisfied, whether the same precoding is applied to the first RB group and the second RB group depends on whether the first condition is satisfied.

As one embodiment, only when the second condition is satisfied, whether the same precoding is applied to the first RB group and the second RB group depends on whether the first condition is satisfied.

As one embodiment, when the second condition is not satisfied, different precoding is applied to the first RB group and the second RB group.

As one embodiment, the second condition being satisfied refers to: the first node is configured with the first higher-layer parameter.

As one embodiment, the second condition being satisfied refers to: the first node is configured with the first higher-layer parameter set to the second parameter.

As one embodiment, the second condition being not satisfied refers to: the first node is not configured with the first higher-layer parameter.

As one embodiment, the second condition being not satisfied refers to: the first node is not configured with the first higher-layer parameter set to the second parameter.

As one embodiment, the second condition set comprises a third condition, and the third condition comprises: the ratio of the sum of the number of RBs included in the first frequency domain resource and the number of RBs included in the second frequency domain resource to the number of the first RBs is greater than an eighth threshold.

As one embodiment, the second condition set comprises a third condition, and the third condition comprises: the ratio of the sum of the number of RBs included in the first frequency domain resource and the number of RBs included in the second frequency domain resource to the number of the first RBs is greater than or equal to an eighth threshold.

As one embodiment, the number of the first RBs is equal to the number of RBs included in the first BWP.

As one embodiment, the number of the first RBs is equal to the number of RBs in the first BWP that do not belong to a guard band.

As one embodiment, the number of first RBs is equal to the number of PBs in the first BWP other than the first frequency domain resource and the second frequency domain resource.

As one embodiment, the number of first RBs is equal to the number of PBs in the first BWP other than the first frequency domain resource, the second frequency domain resource, and a guard band.

As one embodiment, the eighth threshold is a positive real number.

As one embodiment, the eighth threshold is a positive real number less than 1.

As one embodiment, the eighth threshold is a positive real number greater than 1.

As one embodiment, the eighth threshold is configurable.

As one embodiment, the eighth threshold is configured by RRC signaling.

As one embodiment, the eighth threshold is fixed.

As one embodiment, the eighth threshold does not need to be configured.

As one embodiment, the eighth threshold does not need to be configured by a base station.

As one embodiment, when the ratio of the sum of the number of RBs included in the first frequency domain resource and the number of RBs included in the second frequency domain resource to the number of the first RBs is greater than the eighth threshold, the third condition is satisfied.

As one embodiment, when the ratio of the sum of the number of RBs included in the first frequency domain resource and the number of RBs included in the second frequency domain resource to the number of the first RBs is greater than or equal to the eighth threshold, the third condition is satisfied.

As one embodiment, when the ratio of the sum of the number of RBs included in the first frequency domain resource and the number of RBs included in the second frequency domain resource to the number of the first RBs is not greater than the eighth threshold, the third condition is not satisfied.

As one embodiment, when the ratio of the sum of the number of RBs included in the first frequency domain resource and the number of RBs included in the second frequency domain resource to the number of the first RBs is less than the eighth threshold, the third condition is not satisfied.

As one embodiment, when the third condition is satisfied, whether the same precoding is applied to the first RB group and the second RB group depends on whether the first condition is satisfied.

As one embodiment, only when the third condition is satisfied, whether the same precoding is applied to the first RB group and the second RB group depends on whether the first condition is satisfied.

As one embodiment, when the third condition is not satisfied, different precoding is applied to the first RB group and the second RB group.

As one embodiment, the third condition being satisfied refers to: the ratio of the sum of the number of RBs included in the first frequency domain resource and the number of RBs included in the second frequency domain resource to the number of the first RBs is greater than the eighth threshold.

As one embodiment, the third condition being satisfied refers to: the ratio of the sum of the number of RBs included in the first frequency domain resource and the number of RBs included in the second frequency domain resource to the number of the first RBs is greater than or equal to the eighth threshold.

As one embodiment, the third condition being not satisfied refers to: the ratio of the sum of the number of RBs included in the first frequency domain resource and the number of RBs included in the second frequency domain resource to the number of the first RBs is not greater than the eighth threshold.

As one embodiment, the third condition being not satisfied refers to: the ratio of the sum of the number of RBs included in the first frequency domain resource and the number of RBs included in the second frequency domain resource to the number of the first RBs is less than the eighth threshold.

As one embodiment, the second condition set comprises a fourth condition, and the fourth condition comprises: the number of RBs spaced between the first frequency domain resource and the second frequency domain resource is less than a ninth threshold.

As one embodiment, the second condition set comprises a fourth condition, and the fourth condition comprises: the number of RBs spaced between the first frequency domain resource and the second frequency domain resource is less than or equal to a ninth threshold.

As one embodiment, the first frequency domain resource is lower than the second frequency domain resource in the frequency domain.

As one sub-embodiment of the above embodiment, the number of RBs spaced between the first frequency domain resource and the second frequency domain resource is equal to the number of RBs that are higher than the highest RB in the first frequency domain resource and lower than the lowest RB in the second frequency domain resource.

As one sub-embodiment of the above embodiment, the number of RBs spaced between the first frequency domain resource and the second frequency domain resource is equal to the number of RBs that are higher than the highest RB in the first frequency domain resource and lower than the lowest RB in the second frequency domain resource plus 1.

As one sub-embodiment of the above embodiment, the number of RBs spaced between the first frequency domain resource and the second frequency domain resource is equal to the number of RBs that are higher than the highest RB in the first frequency domain resource and lower than the lowest RB in the second frequency domain resource minus 1.

As one embodiment, the first frequency domain resource is higher than the second frequency domain resource in the frequency domain.

As one sub-embodiment of the above embodiment, the number of RBs spaced between the first frequency domain resource and the second frequency domain resource is equal to the number of RBs that are lower than the lowest RB in the first frequency domain resource and higher than the highest RB in the second frequency domain resource.

As one sub-embodiment of the above embodiment, the number of RBs spaced between the first frequency domain resource and the second frequency domain resource is equal to the number of RBs that are lower than the lowest RB in the first frequency domain resource and higher than the highest RB in the second frequency domain resource plus 1.

As one sub-embodiment of the above embodiment, the number of RBs spaced between the first frequency domain resource and the second frequency domain resource is equal to the number of RBs that are lower than the lowest RB in the first frequency domain resource and higher than the highest RB in the second frequency domain resource minus 1.

As one embodiment, the ninth threshold is a positive real number.

As one embodiment, the ninth threshold is a positive integer.

As one embodiment, the ninth threshold is greater than 1.

As one embodiment, the ninth threshold is configurable.

As one embodiment, the ninth threshold is configured by RRC signaling.

As one embodiment, the ninth threshold is fixed.

As one embodiment, the ninth threshold does not need to be configured.

As one embodiment, the ninth threshold does not need to be configured by a base station.

As one embodiment, the ninth threshold depends on the number of RBs included in the first BWP.

As one embodiment, the ninth threshold depends on the subcarrier spacing of the first BWP.

As one embodiment, when the number of RBs spaced between the first frequency domain resource and the second frequency domain resource is less than the ninth threshold, the fourth condition is satisfied.

As one embodiment, when the number of RBs spaced between the first frequency domain resource and the second frequency domain resource is less than or equal to the ninth threshold, the fourth condition is satisfied.

As one embodiment, when the number of RBs spaced between the first frequency domain resource and the second frequency domain resource is not less than the ninth threshold, the fourth condition is not satisfied.

As one embodiment, when the number of RBs spaced between the first frequency domain resource and the second frequency domain resource is greater than the ninth threshold, the fourth condition is not satisfied.

As one embodiment, when the fourth condition is satisfied, whether the same precoding is applied to the first RB group and the second RB group depends on whether the first condition is satisfied.

As one embodiment, only when the fourth condition is satisfied, whether the same precoding is applied to the first RB group and the second RB group depends on whether the first condition is satisfied.

As one embodiment, when the fourth condition is not satisfied, different precoding is applied to the first RB group and the second RB group.

As one embodiment, the fourth condition being satisfied refers to: the number of RBs spaced between the first frequency domain resource and the second frequency domain resource is less than the ninth threshold.

As one embodiment, the fourth condition being satisfied refers to: the number of RBs spaced between the first frequency domain resource and the second frequency domain resource is less than or equal to the ninth threshold.

As one embodiment, the fourth condition being not satisfied refers to: the number of RBs spaced between the first frequency domain resource and the second frequency domain resource is not less than the ninth threshold.

As one embodiment, the fourth condition being not satisfied refers to: the number of RBs spaced between the first frequency domain resource and the second frequency domain resource is greater than the ninth threshold.

As one embodiment, the second condition set comprises a fifth condition, and the fifth condition comprises: the first signal overlaps with the first time domain resource in a time domain.

As one embodiment, the second condition set comprises a fifth condition, and the fifth condition comprises: each symbol occupied by the first signal belongs to the first time domain resource.

As one embodiment, when the first signal overlaps with the first time domain resource in a time domain, the fifth condition is satisfied.

As one embodiment, when each symbol occupied by the first signal belongs to the first time domain resource, the fifth condition is satisfied.

As one embodiment, when the first signal is orthogonal to the first time domain resource in a time domain, the fifth condition is not satisfied.

As one embodiment, when at least one symbol occupied by the first signal does not belong to the first time domain resource, the fifth condition is not satisfied.

As one embodiment, when the fifth condition is satisfied, whether the same precoding is applied to the first RB group and the second RB group depends on whether the first condition is satisfied.

As one embodiment, only when the fifth condition is satisfied, whether the same precoding is applied to the first RB group and the second RB group depends on whether the first condition is satisfied.

As one embodiment, when the fifth condition is not satisfied, different precoding is applied to the first RB group and the second RB group.

As one embodiment, the fifth condition being satisfied refers to: the first signal overlaps with the first time domain resource in a time domain.

As one embodiment, the fifth condition being satisfied refers to: each symbol occupied by the first signal belongs to the first time domain resource.

As one embodiment, the fifth condition being not satisfied refers to: the first signal is orthogonal to the first time domain resource in a time domain.

As one embodiment, the fifth condition being not satisfied refers to: at least one symbol occupied by the first signal does not belong to the first time domain resource.

As one embodiment, the second condition set comprises a sixth condition, and the sixth condition comprises: a DCI field bundling size indicator of the first signaling is set to 1, and a first bundle size set configured by higher-layer parameters comprises two values.

As one embodiment, the sixth condition comprises: the first bundle size set is set to 'n2-wideband' or 'n4-wideband'.

As one embodiment, the first bundle size set is a bundle size set configured by a higher-layer parameter bundleSizeSetl.

As one embodiment, when a DCI field bundling size indicator of the first signaling is set to 1, and the first bundle size set configured by higher-layer parameters comprises two values, the sixth condition is satisfied.

As one embodiment, when a DCI field bundling size indicator of the first signaling is set to 0, or the first bundle size set configured by higher-layer parameters comprises only 1 value, the sixth condition is not satisfied.

As one embodiment, when the sixth condition is satisfied, whether the same precoding is applied to the first RB group and the second RB group depends on whether the first condition is satisfied.

As one embodiment, only when the sixth condition is satisfied, whether the same precoding is applied to the first RB group and the second RB group depends on whether the first condition is satisfied.

As one embodiment, when the sixth condition is not satisfied, different precoding is applied to the first RB group and the second RB group.

As one embodiment, the sixth condition being satisfied refers to: a DCI field bundling size indicator of the first signaling is set to 1, and the first bundle size set configured by higher-layer parameters comprises two values.

As one embodiment, the sixth condition being not satisfied refers to: a DCI field bundling size indicator of the first signaling is set to 0, or the first bundle size set configured by higher-layer parameters comprises only 1 value.

As one embodiment, the second condition set comprises at least one of the second condition, the third condition, the fourth condition, the fifth condition, and the sixth condition.

As one embodiment, the second condition set is composed of at least one of the second condition, the third condition, the fourth condition, the fifth condition, and the sixth condition.

As one embodiment, the second condition set comprises the second condition and the third condition.

As one embodiment, the second condition set comprises the second condition and the fourth condition.

As one embodiment, the second condition set comprises the second condition, the third condition, and the fifth condition.

As one embodiment, the second condition set comprises the second condition, the fourth condition, and the fifth condition.

As one embodiment, the second condition set comprises the second condition, the third condition, and the sixth condition.

As one embodiment, the second condition set comprises the second condition, the fourth condition, and the sixth condition.

As one embodiment, the second condition set comprises the second condition, the third condition, the fifth condition, and the sixth condition.

As one embodiment, the second condition set comprises the second condition, the fourth condition, the fifth condition, and the sixth condition.

As one embodiment, the second condition set comprises the third condition, the fifth condition, and the sixth condition.

As one embodiment, the second condition set comprises the fourth condition, the fifth condition, and the sixth condition.

As one embodiment, the second condition set comprises the fifth condition and the sixth condition.

As one embodiment, the second condition set comprises the fifth condition and the sixth condition.

As one embodiment, the second condition set comprises the third condition and the fifth condition.

As one embodiment, the second condition set comprises the fourth condition and the fifth condition.

As one embodiment, the second condition set comprises the third condition and the sixth condition.

As one embodiment, the second condition set comprises the fourth condition and the sixth condition.

As one embodiment, the second condition set is composed of the second condition and the third condition.

As one embodiment, the second condition set is composed of the second condition and the fourth condition.

As one embodiment, the second condition set is composed of the second condition, the third condition, and the fifth condition.

As one embodiment, the second condition set is composed of the second condition, the fourth condition, and the fifth condition.

As one embodiment, the second condition set is composed of the second condition, the third condition, and the sixth condition.

As one embodiment, the second condition set is composed of the second condition, the fourth condition, and the sixth condition.

As one embodiment, the second condition set is composed of the second condition, the third condition, the fifth condition, and the sixth condition.

As one embodiment, the second condition set is composed of the second condition, the fourth condition, the fifth condition, and the sixth condition.

As one embodiment, the second condition set is composed of the third condition, the fifth condition, and the sixth condition.

As one embodiment, the second condition set is composed of the fourth condition, the fifth condition, and the sixth condition.

As one embodiment, the second condition set is composed of the fifth condition and the sixth condition.

As one embodiment, the second condition set is composed of the fifth condition and the sixth condition.

As one embodiment, the second condition set is composed of the third condition and the fifth condition.

As one embodiment, the second condition set is composed of the fourth condition and the fifth condition.

As one embodiment, the second condition set is composed of the third condition and the sixth condition.

As one embodiment, the second condition set is composed of the fourth condition and the sixth condition.

**Embodiment 15**

Embodiment 15 illustrates a structural block diagram of a processing apparatus used in a first node according to one embodiment of the present application, as shown in FIG. 15. In FIG. 15, a processing apparatus 1500 in a first node comprises a first receiver 1501.

In Embodiment 15, a first receiver 1501 receives a first information block, receives first signaling, and receives a first signal.

In Embodiment 15, the first information block is used for determining a first frequency domain resource and a second frequency domain resource, the first frequency domain resource and the second frequency domain resource respectively comprise at least one RB, the first frequency domain resource and the second frequency domain resource are orthogonal to each other, and the first frequency domain resource and the second frequency domain resource are discontinuous; the first signaling indicates scheduling information of the first signal; the first signal occupies a first RB group and a second RB group; the first RB group belongs to the first frequency domain resource, and the second RB group belongs to the second frequency domain resource; whether the same precoding is applied to the first RB group and the second RB group depends on whether a first condition is satisfied; when the first condition is satisfied, the same precoding is applied to the first RB group and the second RB group; and the first condition is related to both the first RB group and the second RB group.

As one embodiment, the first condition comprises: the sum of the number of RBs included in the first RB group and the number of RBs included in the second RB group is greater than a first threshold.

As one embodiment, the first condition comprises: the number of RBs spaced between the first RB group and the second RB group is less than a second threshold.

As one embodiment, the first condition comprises: the number of RBs included from a first RB to a second RB is greater than a third threshold, wherein the first RB is the lowest RB in the first RB group and the second RB group, and the second RB is the highest RB in the first RB group and the second RB group.

As one embodiment, when the first condition is not satisfied, a precoding granularity of the first RB group depends on at least the former of the number of RBs included in the first frequency domain resource and the number of RBs included in the second frequency domain resource.

As one embodiment, the first receiver 1501 receives a second information block, and the second information block is used for determining a first time domain resource, wherein the first signal overlaps with the first time domain resource in a time domain.

As one embodiment, only when each condition in a second condition set is satisfied, whether the same precoding is applied to the first RB group and the second RB group depends on whether the first condition is satisfied; and the second condition set comprises at least one condition.

As one embodiment, the first node device is user equipment.

As one embodiment, the first node device is a relay node device.

As one embodiment, the first frequency domain resource comprises a plurality of continuous PRBs, and the second frequency domain resource comprises a plurality of continuous PRBs; the first frequency domain resource and the second frequency domain resource belong to the same BWP; and the first RB group comprises one PRB or a plurality of continuous PRBs, and the second RB group comprises one PRB or a plurality of continuous PRBs.

As one embodiment, a first receiver 1501 comprises at least one of {an antenna 452, a receiver 454, a receiving processor 456, a multi-antenna receiving processor 458, a controller/processor 459, a memory 460, and a data source 467} in Embodiment 4.

## Embodiment 16

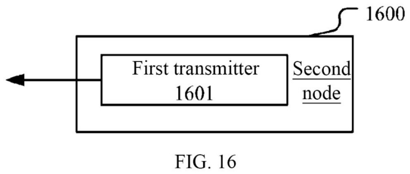

Embodiment 16 illustrates a structural block diagram of a processing apparatus used in a second node according to one embodiment of the present application, as shown in FIG. 16. In FIG. 16, a processing apparatus 1600 in the second node comprises the first transmitter 1601.

In Embodiment 16, a first transmitter 1601 transmits a first information block, transmits first signaling, and transmits a first signal.

In Embodiment 16, the first information block is used for determining a first frequency domain resource and a second frequency domain resource, the first frequency domain resource and the second frequency domain resource respectively comprise at least one RB, the first frequency domain resource and the second frequency domain resource are orthogonal to each other, and the first frequency domain resource and the second frequency domain resource are discontinuous; the first signaling indicates scheduling information of the first signal; the first signal occupies a first RB group and a second RB group; the first RB group belongs to the first frequency domain resource, and the second RB group belongs to the second frequency domain resource; whether the same precoding is applied to the first RB group and the second RB group depends on whether a first condition is satisfied; when the first condition is satisfied, the same precoding is applied to the first RB group and the second RB group; and the first condition is related to both the first RB group and the second RB group.

As one embodiment, the first condition comprises: the sum of the number of RBs included in the first RB group and the number of RBs included in the second RB group is greater than a first threshold.

As one embodiment, the first condition comprises: the number of RBs spaced between the first RB group and the second RB group is less than a second threshold.

As one embodiment, the first condition comprises: the number of RBs included from a first RB to a second RB is greater than a third threshold, wherein the first RB is the lowest RB in the first RB group and the second RB group, and the second RB is the highest RB in the first RB group and the second RB group.

As one embodiment, when the first condition is not satisfied, the precoding granularity of the first RB group depends on at least the former of the number of RBs included in the first frequency domain resource and the number of RBs included in the second frequency domain resource.

As one embodiment, the first transmitter 1601 transmits a second information block, and the second information block is used for determining a first time domain resource, wherein the first signal overlaps with the first time domain resource in a time domain.

As one embodiment, only when each condition in a second condition set is satisfied, whether the same precoding is applied to the first RB group and the second RB group depends on whether the first condition is satisfied; and the second condition set comprises at least one condition.

As one embodiment, the second node is a base station device.

As one embodiment, the second node is user equipment.

As one embodiment, the second node is a relay node device.

As one embodiment, the first frequency domain resource comprises a plurality of continuous PRBs, and the second frequency domain resource comprises a plurality of continuous PRBs; the first frequency domain resource and the second frequency domain resource belong to the same BWP; and the first RB group comprises one PRB or a plurality of continuous PRBs, and the second RB group comprises one PRB or a plurality of continuous PRBs.

As one embodiment, the first transmitter 1601 comprises at least one of {an antenna 420, a transmitter 418, a transmitting processor 416, a multi-antenna transmitting processor 471, a controller/processor 475, and a memory 476} in Embodiment 4.

Those ordinarily skilled in the art may understand that all or some of the steps in the above method can be completed by instructing relevant hardware through a program, and the program may be stored in a computer-readable storage medium, such as a read-only memory, a hard disk or an optical disk. Optionally, all or some of the steps in the above embodiment may also be implemented using one or more integrated circuits. Accordingly, each module unit in the above embodiment may be implemented in the form of hardware or in the form of a software function module. The present application is not limited to any specific form of software and hardware combination. The user equipment, the terminal and the UE in the present application comprise but are not limited to a drone, a communication module on the drone, a remote-controlled airplane, an aircraft, a small airplane, a mobile phone, a tablet computer, a laptop, a vehicle-mounted communication device, a transportation vehicle, a vehicle, an RSU, a wireless sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer and other wireless communication devices. The base station or the system device in the present application comprises but is not limited to a macro cellular base station, a micro cellular base station, a small cellular base station, a femtocell, a relay base station, an eNB, a gNB, a TRP (Transmitter Receiver Point), a GNSS, a relay satellite, a satellite base station, an aerial base station, an RSU (Road Side Unit), a drone, and a test device. For example, a wireless communication device such as a transceiver or a signaling tester that simulates some functions of the base station.

Those skilled in the art should understand that the present invention may be implemented in other specified forms without departing from the core or basic features thereof. Therefore, the embodiments disclosed at present should be regarded as descriptive rather than restrictive in any way. The scope of the invention is determined by the appended claims rather than the previous description, and all changes within their equivalent meanings and areas are deemed to be included therein.

## Claims

1. A first node used for wireless communication, comprising:

   a first receiver receiving a first information block, the first information block being used for determining a first frequency domain resource and a second frequency domain resource, the first frequency domain resource and the second frequency domain resource respectively comprising at least one RB, the first frequency domain resource and the second frequency domain resource being orthogonal to each other, and the first frequency domain resource and the second frequency domain resource being discontinuous;
   the first receiver receiving first signaling, the first signaling indicating scheduling information of a first signal; and
   the first receiver receiving the first signal, wherein the first signal occupies a first RB group and a second RB group, the first RB group belongs to the first frequency domain resource, and the second RB group belongs to the second frequency domain resource; whether same precoding is applied to the first RB group and the second RB group depends on whether a first condition is satisfied; when the first condition is satisfied, the same precoding is applied to the first RB group and the second RB group; and the first condition is related to both the first RB group and the second RB group.

2. The first node according to claim 1, wherein the first condition comprises: a sum of a number of RBs included in the first RB group and a number of RBs included in the second RB group is greater than a first threshold.

3. The first node according to claim 1 or 2, wherein the first condition comprises: a number of RBs spaced between the first RB group and the second RB group is less than a second threshold.

4. The first node according to any one of claims 1 to 3, wherein the first condition comprises: a number of RBs included from a first RB to a second RB is greater than a third threshold, wherein the first RB is a lowest RB in the first RB group and the second RB group, and the second RB is a highest RB in the first RB group and the second RB group.

5. The first node according to any one of claims 1 to 4, wherein when the first condition is not satisfied, a precoding granularity of the first RB group depends on at least the former of a number of RBs included in the first frequency domain resource and a number of RBs included in the second frequency domain resource.

6. The first node according to any one of claims 1 to 5, wherein the first receiver receives a second information block, the second information block being used for determining a first time domain resource, wherein the first signal overlaps with the first time domain resource in a time domain.

7. The first node according to any one of claims 1 to 6, wherein only when each condition in a second condition set is satisfied, whether the same precoding is applied to the first RB group and the second RB group depends on whether the first condition is satisfied; and the second condition set comprises at least one condition.

8. A second node used for wireless communication, comprising:

   a first transmitter transmitting a first information block, the first information block being used for determining a first frequency domain resource and a second frequency domain resource, the first frequency domain resource and the second frequency domain resource respectively comprising at least one RB, the first frequency domain resource and the second frequency domain resource being orthogonal to each other, and the first frequency domain resource and the second frequency domain resource being discontinuous;
   the first transmitter transmitting first signaling, the first signaling indicating scheduling information of a first signal; and
   the first transmitter transmitting the first signal, wherein the first signal occupies a first RB group and a second RB group, the first RB group belongs to the first frequency domain resource, and the second RB group belongs to the second frequency domain resource; whether same precoding is applied to the first RB group and the second RB group depends on whether a first condition is satisfied; when the first condition is satisfied, the same precoding is applied to the first RB group and the second RB group; and the first condition is related to both the first RB group and the second RB group.

9. The second node according to claim 8, wherein the first condition comprises: a sum of a number of RBs included in the first RB group and a number of RBs included in the second RB group is greater than a first threshold.

10. The second node according to claim 8 or 9, wherein the first condition comprises: a number of RBs spaced between the first RB group and the second RB group is less than a second threshold.

11. The second node according to any one of claims 8 to 10, wherein the first condition comprises: a number of RBs included from a first RB to a second RB is greater than a third threshold, wherein the first RB is a lowest RB in the first RB group and the second RB group, and the second RB is a highest RB in the first RB group and the second RB group.

12. The second node according to any one of claims 8 to 11, wherein when the first condition is not satisfied, a precoding granularity of the first RB group depends on at least the former of a number of RBs included in the first frequency domain resource and a number of RBs included in the second frequency domain resource.

13. The second node according to any one of claims 8 to 12, wherein the first transmitter transmits a second information block, the second information block being used for determining a first time domain resource, wherein the first signal overlaps with the first time domain resource in a time domain.

14. The second node according to any one of claims 8 to 13, wherein only when each condition in a second condition set is satisfied, whether the same precoding is applied to the first RB group and the second RB group depends on whether the first condition is satisfied; and the second condition set comprises at least one condition.

15. A method used in a first node for wireless communication, comprising:

  receiving a first information block, the first information block being used for determining a first frequency domain resource and a second frequency domain resource, the first frequency domain resource and the second frequency domain resource respectively comprising at least one RB, the first frequency domain resource and the second frequency domain resource being orthogonal to each other, and the first frequency domain resource and the second frequency domain resource being discontinuous;
  receiving first signaling, the first signaling indicating scheduling information of a first signal; and
  receiving the first signal,
  wherein the first signal occupies a first RB group and a second RB group, the first RB group belongs to the first frequency domain resource, and the second RB group belongs to the second frequency domain resource; whether same precoding is applied to the first RB group and the second RB group depends on whether a first condition is satisfied; when the first condition is satisfied, the same precoding is applied to the first RB group and the second RB group; and the first condition is related to both the first RB group and the second RB group.

16. The method according to claim 15, wherein the first condition comprises: a sum of a number of RBs included in the first RB group and a number of RBs included in the second RB group is greater than a first threshold.

17. The method according to claim 15 or 16, wherein the first condition comprises: a number of RBs spaced between the first RB group and the second RB group is less than a second threshold.

18. The method according to any one of claims 15 to 17, wherein the first condition comprises: a number of RBs included from a first RB to a second RB is greater than a third threshold, wherein the first RB is a lowest RB in the first RB group and the second RB group, and the second RB is a highest RB in the first RB group and the second RB group.

19. The method according to any one of claims 15 to 18, wherein when the first condition is not satisfied, a precoding granularity of the first RB group depends on at least the former of a number of RBs included in the first frequency domain resource and a number of RBs included in the second frequency domain resource.

20. The method according to any one of claims 15 to 19, comprising:

  receiving a second information block, the second information block being used for determining a first time domain resource,
  wherein the first signal overlaps with the first time domain resource in a time domain.

21. The method according to any one of claims 15 to 20, wherein only when each condition in a second condition set is satisfied, whether the same precoding is applied to the first RB group and the second RB group depends on whether the first condition is satisfied; and the second condition set comprises at least one condition.

22. A method used in a second node for wireless communication, comprising:

  transmitting a first information block, the first information block being used for determining a first frequency domain resource and a second frequency domain resource, the first frequency domain resource and the second frequency domain resource respectively comprising at least one RB, the first frequency domain resource and the second frequency domain resource being orthogonal to each other, and the first frequency domain resource and the second frequency domain resource being discontinuous;
  transmitting first signaling, the first signaling indicating scheduling information of a first signal; and
  transmitting the first signal,
  wherein the first signal occupies a first RB group and a second RB group, the first RB group belongs to the first frequency domain resource, and the second RB group belongs to the second frequency domain resource; whether same precoding is applied to the first RB group and the second RB group depends on whether a first condition is satisfied; when the first condition is satisfied, the same precoding is applied to the first RB group and the second RB group; and the first condition is related to both the first RB group and the second RB group.

23. The method according to claim 22, wherein the first condition comprises: a sum of a number of RBs included in the first RB group and a number of RBs included in the second RB group is greater than a first threshold.

24. The method according to claim 22 or 23, wherein the first condition comprises: a number of RBs spaced between the first RB group and the second RB group is less than a second threshold.

25. The method according to any one of claims 22 to 24, wherein the first condition comprises: a number of RBs included from a first RB to a second RB is greater than a third threshold, wherein the first RB is a lowest RB in the first RB group and the second RB group, and the second RB is a highest RB in the first RB group and the second RB group.

26. The method according to any one of claims 22 to 25, wherein when the first condition is not satisfied, a precoding granularity of the first RB group depends on at least the former of a number of RBs included in the first frequency domain resource and a number of RBs included in the second frequency domain resource.

27. The method according to any one of claims 22 to 26, comprising:

   transmitting a second information block, the second information block being used for determining a first time domain resource, wherein the first signal overlaps with the first time domain resource in a time domain.

28. The method according to any one of claims 22 to 27, wherein only when each condition in a second condition set is satisfied, whether the same precoding is applied to the first RB group and the second RB group depends on whether the first condition is satisfied; and the second condition set comprises at least one condition.

FIG. 1

FIG. 2

FIG. 3

FIG. 4

FIG. 5

Frequency domain

First frequency domain
resource

⋮

Second frequency domain
resource

FIG. 6

First BWP

First frequency domain
resource

Guard band

Third frequency domain
resource

Guard band

Second frequency domain
resource

FIG. 7

Whether same precoding is applied to a first RB
group and a second RB group $\xrightarrow{\text{Depends on}}$ Whether a first
condition is satisfied

First condition $\Big\{$ A sum of a number of RBs included in a first RB group and a number
of RBs included in a second RB group is greater than a first threshold

FIG. 8

Whether same precoding is applied to a first
RB group and a second RB group $\xrightarrow{\text{Depends on}}$ Whether a first
condition is satisfied

First condition $\Big\{$ A number of RBs spaced between a first RB group and a second
RB group is less than a second threshold

FIG. 9

Whether same precoding is applied to a first RB group and a second RB group  —Depends on→  Whether a first condition is satisfied

First condition { A number of RBs included from a first RB to a second RB is greater than a third threshold

FIG. 10

When a first condition is not satisfied, a precoding granularity of a first RB group  —Depends on→  A number of RBs included in a first frequency domain resource

FIG. 11

When a first condition is not satisfied, a precoding granularity of a first RB group  —Depends on→  A number of RBs included in a first frequency domain resource and a number of RBs included in a second frequency domain resource

FIG. 12

Second information block  —Is used for determining→  First time domain resource

FIG. 13

Only when each condition in a second condition set is satisfied, whether same precoding is applied to a first RB group and a second RB group  —Depends on→  Whether a first condition is satisfied

FIG. 14

1500

| First receiver 1501 | First node |

FIG. 15

FIG. 16

## INTERNATIONAL SEARCH REPORT

| International application No. |
|---|
| **PCT/CN2024/090261** |

### A. CLASSIFICATION OF SUBJECT MATTER

H04W 72/0453(2023.01)i

According to International Patent Classification (IPC) or to both national classification and IPC

### B. FIELDS SEARCHED

Minimum documentation searched (classification system followed by classification symbols)

IPC:H04W,H04L,H04J

Documentation searched other than minimum documentation to the extent that such documents are included in the fields searched

Electronic data base consulted during the international search (name of data base and, where practicable, search terms used)

CNTXT, ENTXTC, DWPI, 3GPP, CNKI: 子带非重叠全双工, 子带全双工, 灵活双工, 频域, 子带, 带宽部分, 资源块, 不连续, 正交, 预编码, 编码器, 个数, 数目, SBFD, subband non-overlapping full duplex, frequency, subband, BWP, RB, resource block, discontinuous, orthogonal, precoding, coder, number.

### C. DOCUMENTS CONSIDERED TO BE RELEVANT

| Category* | Citation of document, with indication, where appropriate, of the relevant passages | Relevant to claim No. |
|---|---|---|
| Y | CN 115913485 A (SHANGHAI LANGBO COMMUNICATION TECHNOLOGY CO., LTD.) 04 April 2023 (2023-04-04) description, paragraphs 401-562 | 1, 5-8, 12-15, 19-22, 26-28 |
| Y | WO 2021203233 A1 (QUALCOMM INC. etc.) 14 October 2021 (2021-10-14) entire document | 1, 5-8, 12-15, 19-22, 26-28 |
| A | CN 109842576 A (VIVO COMMUNICATION TECHNOLOGY CO., LTD.) 04 June 2019 (2019-06-04) entire document | 1-28 |
| A | CN 114902576 A (QUALCOMM INC.) 12 August 2022 (2022-08-12) entire document | 1-28 |
| A | CN 115767689 A (HUAWEI TECHNOLOGIES CO., LTD.) 07 March 2023 (2023-03-07) entire document | 1-28 |
| A | US 2021119747 A1 (LG ELECTRONICS INC.) 22 April 2021 (2021-04-22) entire document | 1-28 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 June 2024** | **24 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 712 630 A1**

## INTERNATIONAL SEARCH REPORT

International application No.

**PCT/CN2024/090261**

### C. DOCUMENTS CONSIDERED TO BE RELEVANT

| Category* | Citation of document, with indication, where appropriate, of the relevant passages | Relevant to claim No. |
|---|---|---|
| A | WO 2022031824 A1 (RASTEGARDOOST NAZANIN, etc.) 10 February 2022 (2022-02-10) entire document | 1-28 |
| A | NEW H3C TECHNOLOGIES CO., LTD. "R1-2302426 "Discussion for subband non-overlapping full duplex"" *3GPP tsg_ran\wg1_rl1*, No. tsgr1_112b-e, 07 April 2023 (2023-04-07), entire document | 1-28 |
| A | MEDIATEK INC. "R1-2302736 "Discussion on subband non-overlapping full duplex for NR"" *3GPP tsg_ran\wg1_rl1*, No. tsgr1_112b-e, 07 April 2023 (2023-04-07), entire document | 1-28 |

Form PCT/ISA/210 (second sheet) (July 2022)

## INTERNATIONAL SEARCH REPORT
### Information on patent family members

International application No.

**PCT/CN2024/090261**

| Patent document cited in search report | | | Publication date (day/month/year) | Patent family member(s) | | | Publication date (day/month/year) |
|---|---|---|---|---|---|---|---|
| CN | 115913485 | A | 04 April 2023 | None | | | |
| WO | 2021203233 | A1 | 14 October 2021 | EP | 4133888 | A1 | 15 February 2023 |
| | | | | EP | 4133888 | A4 | 03 January 2024 |
| | | | | US | 2023144233 | A1 | 11 May 2023 |
| CN | 109842576 | A | 04 June 2019 | US | 2020252189 | A1 | 06 August 2020 |
| | | | | US | 11196528 | B2 | 07 December 2021 |
| | | | | EP | 3694272 | A1 | 12 August 2020 |
| | | | | EP | 3694272 | A4 | 09 December 2020 |
| | | | | WO | 2019062604 | A1 | 04 April 2019 |
| CN | 114902576 | A | 12 August 2022 | US | 2022416867 | A1 | 29 December 2022 |
| | | | | EP | 4085537 | A1 | 09 November 2022 |
| | | | | WO | 2021138128 | A1 | 08 July 2021 |
| CN | 115767689 | A | 07 March 2023 | None | | | |
| US | 2021119747 | A1 | 22 April 2021 | WO | 2019194580 | A1 | 10 October 2019 |
| | | | | US | 11438117 | B2 | 06 September 2022 |
| WO | 2022031824 | A1 | 10 February 2022 | US | 2023189232 | A1 | 15 June 2023 |

Form PCT/ISA/210 (patent family annex) (July 2022)